# EUROPEAN PATENT SPECIFICATION

(11) **EP 1 925 487 B1**
(45) Date of publication and mention of the grant of the patent: **15.09.2010**
(21) Application number: 07254563.5
(22) Date of filing: 23.11.2007
(51) Int. Cl.: B60K 31/02, B60W 30/14, F16H 61/16, F16H 61/02, B60W 10/06, B60W 10/10

(54) **Vehicle shift control apparatus and vehicle shift control method**
Vorrichtung und Verfahren zur Steuerung der Gangschaltung eines Fahrzeugs
Appareil de commande de vitesses pour véhicule et procédé de commande de vitesses pour véhicule

(30) Priority: 24.11.2006 JP 2006317392
(43) Date of publication of application: 28.05.2008
(73) Proprietor: Toyota Jidosha Kabushiki Kaisha, Toyota-shi, Aichi 471-8571 (JP)
(72) Inventor: Sawada, Hiroyuki c/o Toyota Jidosha Kabushiki Kaisha, Toyota-shi, Aichi-ken 471-8571 (JP); Kitaori, Ichir c/o Toyota Jidosha Kabushiki Kaisha, Toyota-shi, Aichi-ken 471-8571 (JP); Sakamoto, Osamu c/o Toyota Jidosha Kabushiki Kaisha, Toyota-shi, Aichi-ken 471-8571 (JP); Nakane, Yoshihide c/o Toyota Jidosha Kabushiki Kaisha, Toyota-shi, Aichi-ken 471-8571 (JP)
(74) Representative: Albutt, Anthony John

(56) References cited:
- EP-A- 1 057 681
- EP-A- 1 057 683
- EP-A- 1 057 685
- DE-A1- 19 509 492
- DE-A1- 19 924 943
- DE-C1- 19 924 946

## Description

### BACKGROUND OF THE INVENTION

### 1. Field of the Invention

The invention relates to a shift control apparatus and shift control method for a vehicle provided with an automatic transmission. More particularly, the invention relates to control technology for maintaining a vehicle speed equal to or less than a set vehicle speed limitation.

### 2. Description of the Related Art

In an attempt to prevent traffic accidents caused by excessive speed, vehicles provided with a speed limiting function called ASL (Adjustable Speed Limitation) are being put into practical use. ASL is a system that limits the throttle opening amount of the engine according to the relationship between the current vehicle speed and a vehicle speed limitation (hereinafter simply referred to as "speed limitation") that is set as appropriate. For example, the system limits the vehicle speed so that it will not exceed the set speed limitation no matter how much the driver depresses the accelerator pedal.

Many trucks and other large vehicles have been outfitted with such an ASL system. On the other hand, fuel efficiency and other issues have resulted in many large vehicles having manual transmissions in which the driver selects the optimum gear according to the vehicle speed so this kind of ASL system was primarily designed for use with manual transmissions. That is, many ASL systems are configured to control only the throttle opening amount of the engine regardless of the gear or speed of the transmission that is selected.

In recent years, ASL systems have started to be applied to standard-sized vehicles such as passenger vehicles as well. Many standard-sized vehicles have automatic transmissions so it is necessary to limit the throttle opening amount taking into account the shift operations of the automatic transmission. Japanese Patent Application Publication No. 08-104156 (JP-A-08-104156), for example, describes an apparatus that keeps the running speed equal to or less than a predetermined maximum speed by performing a system operation that restricts output when the speed limitation has been exceeded, in addition to Tempomat (closed-loop constant speed running control) that maintains a predetermined speed.

Also, a structure has also been proposed that outputs a command for a shift operation from the ASL system to the automatic transmission. Japanese Patent Application Publication No. 2001-012601 (JP-A-2001-012601), for example, describes a structure for avoiding sudden acceleration from a downshift when the Adjustable Speed Limitation (ASL) function is turned off. With this structure, the actual speed of the transmission is initially maintained for a predetermined interval of time as the lowest speed when the actual accelerator pedal position is greater than an accelerator pedal substitution variable when the speed limitation is switched off.

JP-A-2001-012601 described above describes only a shift operation of the automatic transmission when ASL is cancelled; it does not describe a shift operation while the vehicle speed is being restricted by ASL. Therefore, a shift operation may occur frequently with the ASL described in JP-A-2001-012601.

More specifically, when the driver depresses the accelerator pedal such that a downshift occurs (i.e., a speed with a larger reduction ratio is selected) while ASL is operating, acceleration force acts on the vehicle. When the vehicle speed increases to close to the speed limitation from this acceleration force, the throttle opening amount of the engine is reduced to maintain the vehicle speed at the speed limitation. That is, the throttle opening amount which was increased by the accelerator being depressed by the driver is reduced by the ASL function. Reducing the throttle opening amount increases the likelihood that an upshift will be performed. As a result, a downshift and an upshift may be performed in succession within a short period of time which may be unsettling for the driver.

Generic document DE 19509492 discloses an arrangement in which a limiter intervenes to limit the engine torque while the actual speed is still below the maximum speed, but a demand by the driver for a speed above this is detected.

EP 1057685 discloses an automatic gear arrangement in which the gear ratio is automatically adjusted to match the speed called for by the driver operated accelerator.

### SUMMARY OF THE INVENTION

This invention thus provides a shift control apparatus and shift control method for a vehicle having a mode for keeping the vehicle speed equal to or below a set speed limitation, in which drivability is not sacrificed even when the mode is being executed.

A first aspect of the invention relates to a vehicle shift control apparatus. This vehicle shift control apparatus is used in a vehicle provided with a driving force source that generates driving force for rotating a driving wheel in response to a command produced based on an accelerator operation, and a transmission which is arranged in a power transmitting path from the driving force source to the driving wheel and transmits driving force via a speed ratio selected from a plurality of speed ratios. The vehicle shift control apparatus includes vehicle speed detecting means for detecting a vehicle speed of the vehicle; limitation value determining means for determining a limitation value which is a maximum value of a command that can keep the vehicle speed equal to or less than a set vehicle speed limitation; limiting means for limiting the command so that the command does not exceed the limitation value; shift controlling means for executing shift control for selecting a speed ratio of the transmission based on at least the command after being limited and the vehicle speed; first comparing means for comparing a vehicle speed difference between the vehicle speed and the vehicle speed limitation with a first threshold value; and shift prohibiting means for prohibiting the speed ratio in the shift controlling means from being shifted when the vehicle speed difference is less than the first threshold value.

With this vehicle shift control apparatus, a command to prohibit the transmission from shifting speeds is output when the vehicle speed difference is less than the first threshold value, i.e., while the vehicle speed is near the speed limitation. As a result, a downshift (i.e., a shift into a speed with a larger reduction ratio) will not be performed even if the driver greatly depresses the accelerator pedal. Therefore, an upshift (i.e., a shift into a speed with a smaller reduction ratio) associated with the limitation by the command will also not be performed in succession. Hence it is possible to avoid a decline in drivability that may otherwise occur from frequent shift operations so drivability is not sacrificed while a speed limitation is imposed.

The vehicle shift control apparatus may also include second comparing means for comparing the vehicle speed difference with a second threshold value that is less than the first threshold value; and cancelling means for cancelling the shift prohibition of the speed ratio in the shift controlling means when the vehicle speed difference is less than the second threshold value.

The vehicle shift control apparatus may also include cancelling means for cancelling the shift prohibition of the speed ratio in the shift controlling means after a predetermined period of time has passed after the speed ratio in the shift prohibiting means has been prohibited from being shifted.

The vehicle shift control apparatus may also include second comparing means for comparing the vehicle speed difference with a second threshold value that is less than the first threshold value; and cancelling means for cancelling the shift prohibition of the speed ratio in the shift controlling means when the vehicle speed difference is less than the second threshold value and a predetermined period of time has passed after the speed ratio in the shift prohibiting means has been prohibited from being shifted.

In the vehicle shift control apparatus, the shift prohibiting means may also include detecting means for detecting a rate of increase over time in the accelerator operation; third comparing means for comparing the rate of increase over time in the accelerator operation detected by the detecting means with a third threshold value; and prohibiting condition determining means for prohibiting the speed ratio in the shift controlling means from being shifted when the vehicle speed difference is less than the first threshold value and the rate of increase over time in the accelerator operation is greater than the third threshold value.

In the vehicle shift control apparatus, the shift controlling means may shift the speed ratio from the currently selected speed ratio to a speed ratio with a larger reduction ratio when the command after being limited exceeds a predetermined value determined according to the vehicle speed.

A second aspect not forming part of the invention relates to a vehicle shift control apparatus. This vehicle shift control apparatus is used in a vehicle provided with a driving force source that generates driving force for rotating a driving wheel in response to a command produced based on an accelerator operation, and a transmission which arranged in a power transmitting path from the driving force source to the driving wheel and transmits driving force via a speed ratio selected from a plurality of speed ratios. The vehicle shift control apparatus includes vehicle speed detecting means for detecting a vehicle speed of the vehicle; limitation value determining means for determining a limitation value which is a maximum value of a command that can keep the vehicle speed equal to or less than a set vehicle speed limitation; limiting means for limiting the command so that the command does not exceed the limitation value; shift controlling means for executing shift control for selecting a speed ratio of the transmission based on at least the command after being limited and the vehicle speed; and shift prohibiting means for prohibiting the shift controlling means from shifting out of the currently selected speed ratio in response to a shift to a speed ratio with a larger reduction ratio by the shift controlling means.

With the vehicle shift control apparatus according to this second aspect, a shift prohibiting command is output to maintain the downshifted state when a command to shift into a speed with a larger reduction ratio (i.e., downshift) is output by the shift control portion. Therefore, even if the vehicle speed approaches the speed limitation and the command is limited (i.e., restricted), it is possible to avoid an upsbift (i.e., a shift into a speed with a smaller reduction ratio) from being performed within a short period of time. Accordingly, it is possible to avoid a decrease in drivability due to frequent shift operations so drivability is not sacrificed while the vehicle speed is being limited.

The vehicle shift control apparatus may also include cancelling means for cancelling the shift prohibition of the speed ratio in the shift controlling means after a predetermined period of time has passed after the speed ratio in the shift prohibiting means has been prohibited from being shifted.

The vehicle shift control apparatus may also include first comparing means for comparing the vehicle speed difference between the vehicle speed and the vehicle speed limitation with a first threshold value; and cancelling means for cancelling the shift prohibition of the speed ratio in the shift controlling means after a predetermined period of time has passed after the vehicle speed difference has become less than the first threshold value.

In the vehicle shift control apparatus, the shift prohibiting means may also include second comparing means for comparing the vehicle speed limitation with the second threshold value; and prohibiting condition determining means for prohibiting the speed ratio in the shift controlling means from being shifted when the vehicle speed limitation is less than the second threshold value and the shift controlling means shifts the speed ratio to a speed ratio with a larger reduction ratio.

In the vehicle shift control apparatus, the shift prohibiting means may also include third comparing means for comparing the vehicle speed with the third threshold value; and prohibiting condition determining means for prohibiting the speed ratio in the shift controlling means from being shifted when the vehicle speed is greater than the third threshold value and the shift controlling means shifts the speed ratio to a speed ratio with a larger reduction ratio.

In the vehicle shift control apparatus, the shift controlling means may shift the speed ratio from the currently selected speed ratio to a speed ratio with a smaller reduction ratio when the command after being limited falls below a predetermined value determined according to the vehicle speed.

The vehicle shift control apparatus may also include kickdown means for temporarily cancelling operation of the limiting means and shifting the speed ratio from the currently selected speed ratio to a speed ratio with a larger reduction ratio when the accelerator operation is equal to or greater than a predetermined value; and resetting means for then restarting operation of the limiting means when the vehicle speed has become less than a value equal to the difference of the vehicle speed limitation minus a fourth threshold value.

A third aspect of the invention relates to a vehicle shift control method. This vehicle shift control method is used in a vehicle provided with a driving force source that generates driving force for rotating a driving wheel in response to a command produced based on an accelerator operation, and a transmission which is arranged in a power transmitting path from the driving force source to the driving wheel and transmits driving force via a speed ratio selected from a plurality of speed ratios. The vehicle shift control method includes the steps of: detecting a vehicle speed of the vehicle; determining a limitation value which is a maximum value of a command that can keep the vehicle speed equal to or less than a set vehicle speed limitation; limiting the command so that the command does not exceed the limitation value; executing shift control for selecting a speed ratio of the transmission based on at least the command after being limited and the vehicle speed; comparing a vehicle speed difference between the vehicle speed an the vehicle speed limitation with a first threshold value; and prohibiting the speed ratio from being shifted when the vehicle speed difference is less than the first threshold value.

A fourth aspect not forming part of the invention relates to a vehicle shift control method. This vehicle shift control method is used in a vehicle provided with a driving force source that generates driving force for rotating a driving wheel in response to a command produced based on an accelerator operation, and a transmission which is arranged in a power transmitting path from the driving force source to the driving wheel and transmits driving force via a speed ratio selected from a plurality of speed ratios. The vehicle shift control method includes the steps of: detecting a vehicle speed of the vehicle; determining a limitation value which is a maximum value of a command that can keep the vehicle speed equal to or less than a set vehicle speed limitation; limiting the command so that the command does not exceed the limitation value; executing shift control for selecting a speed ratio of the transmission based on at least the command after being limited and the vehicle speed; and prohibiting a shift out of the currently selected speed ratio in response to a shift to a speed ratio with a larger reduction ratio.

Accordingly, the aspects of the invention make it possible to realize a shift control apparatus and shift control method for a vehicle having a mode for keeping the vehicle speed equal to or below a set speed limitation, in which drivability is not sacrificed even when the mode is being executed.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a block diagram schematically showing a vehicle provided with a control apparatus according to a first example embodiment of the invention;
FIG. 2 is a functional block diagram of the control structure of the control apparatus according to the first example embodiment of the invention;
FIG 3 is a diagram schematically showing a shift operation;
FIGS. 4A to 4D are time charts showing ASL operation according to the first example embodiment of the invention;
FIG 5 is a flowchart illustrating a routine of ASL operation according to the first example embodiment of the invention;
FIG. 6 is a functional block diagram of the control structure of a control apparatus according to a first modified example of the first example embodiment of the invention; .
FIG 7 is a functional block diagram of the control structure of a control apparatus according to a second modified example of the first example embodiment of the invention;
FIG 8 is a functional block diagram of the control structure related to prohibiting a shift in a control apparatus according to a second example embodiment of the invention;
FIGS. 9A to 9D are time charts showing ASL operation according to the second example embodiment of the invention;
FIG. 10 is a flowchart illustrating a routine for ASL operation according to the second example embodiment of the invention;
FIG. 11 is a functional block diagram of the control structure related to prohibiting a shift in a control apparatus according to a first modified example of the second example embodiment of the invention;
FIG 12 is a functional block diagram of the control structure related to prohibiting a shift in a control apparatus according to a second modified example of the second example embodiment of the invention;
FIG 13 is a functional block diagram of the control structure related to prohibiting a shift in a control apparatus according to a third modified example of the second example embodiment of the invention;
FIG. 14 is a block diagram schematically showing the main portions related to a control apparatus according to a third example embodiment of the invention;
FIG 15 is a functional block diagram of the control structure of the control apparatus according to the third example embodiment of the invention; and
FIGS. 16A to 16E are time charts showing an operation related to temporary cancellation of ASL according to the third example embodiment of the invention.

### DETAILED DESCRIPTION OF THE EMBODIMENTS

Hereinafter, example embodiments of the invention will be described in detail with reference to the accompanying drawings. In the following description, similar or corresponding portions in the drawings will be denoted by like reference numerals and detailed descriptions of those parts will not be repeated.

### [First example embodiment]

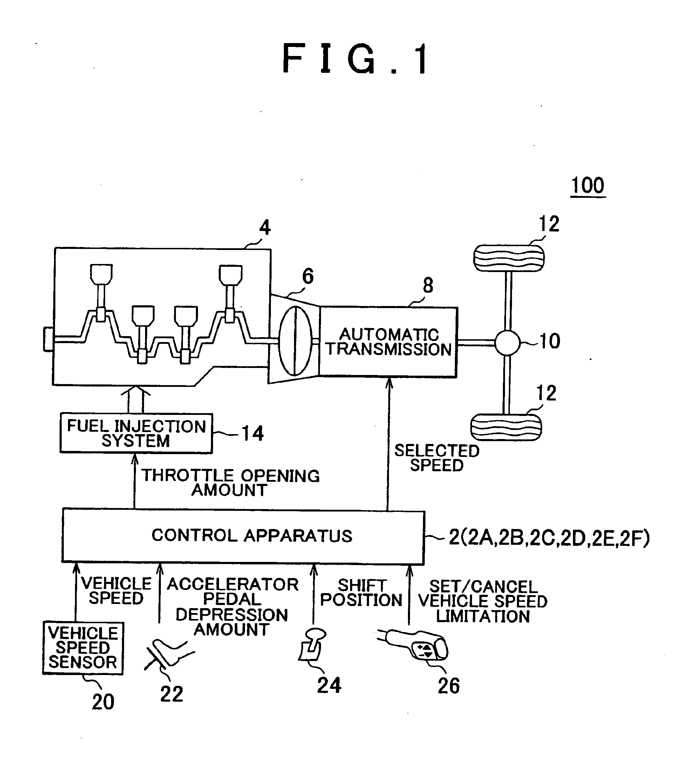

FIG 1 is a block diagram schematically showing a vehicle 100 provided with a control apparatus according to a first example embodiment of the invention.

Referring to FIG 1, the vehicle 100 is an automobile that is provided with ASL (Adjustable Speed Limitation). When ASL is operating or set, the vehicle speed is kept at or below a speed limitation that is set by the driver. The vehicle 100 includes an engine 4, a torque converter 6, an automatic transmission 8, a differential gear 10, driving wheels 12, a control apparatus 2, a fuel injection system 14, a vehicle speed sensor 20, an accelerator pedal 22, a shift lever 24, and an ASL operating device 26. Also, the vehicle 100 runs by transmitting driving force generated by the engine 4, which is the source of the driving force (i.e., the driving force source), to the driving wheels 12 via a power transmitting path that includes the torque converter 6, the automatic transmission 8, and the differential gear 10.

The engine 4 is an internal combustion engine which is structured to generate driving force by burning a fuel such as gasoline or light oil and rotate the driving wheels 12 using that driving force. An output shaft of the engine 4 is connected to the torque converter 6.

The fuel injection system 14 is a system for injecting atomized fuel into cylinders or the like of the engine 4, and is able to control the amount of fuel per unit time in response to a throttle opening amount command from the control apparatus 2. Accordingly, the engine 4 changes the driving force that is generated in response to the throttle opening amount command from the control apparatus 2.

The torque converter 6 is arranged between the engine 4 and the automatic transmission 8. The torque converter 6 changes the rotation speed and torque of the rotational driving force generated by the engine 4 to desired values and then transmits the resultant rotation speed and torque to the automatic transmission 8.

The automatic transmission 8 is arranged between the torque converter 6 and the differential gear 10 and transmits the driving force via a selected one of a plurality of speeds. That is, the automatic transmission 8 converts the rotation speed of the output shaft of the torque converter 6 to a rotation speed corresponding to the reduction ratio of the selected speed and drives the differential gear 10 at that rotation speed. Accordingly, the vehicle speed of the vehicle can be changed (i.e., a shift operation can be performed) by continuously reducing or increasing the reduction ratio of the automatic transmission 8. Incidentally, the automatic transmission 8 selects the speed according to a selected speed command from the control apparatus 2, as will be described later.

The differential gear 10 transmits driving force output from the automatic transmission 8 to the driving wheels 12. Also, the differential gear 10 absorbs the rotational difference of the driving wheels 12 that is generated as the vehicle 100 runs.

The vehicle speed sensor 20 is arranged close to a rotating shaft of a driven wheel, not shown, for example, and detects the speed of the vehicle 100, which it then outputs via a signal to the control apparatus 2.

The accelerator pedal 22 is arranged at the feet of the driver and outputs a signal indicative of the accelerator depression amount, i.e., the amount that the accelerator pedal 22 is being depressed by the driver, to the control apparatus 2. For example, the accelerator pedal 22 houses a Hall-effect sensor or the like that detects the depression amount by the driver and sends a signal detected by that sensor to the control apparatus 2.

The shift lever 24 is arranged next to the driver's seat or on the instrument panel in front of the driver, for example, and can be shifted into various positions to select various ranges such as a P (parking) range, a R (reverse) range, a N (neutral) range, and a D (drive) range. The shift lever 24 sends a signal indicative of the shift position selected by the driver to the control apparatus 2.

The ASL operating device 26 is arranged around the steering wheel, for example, and is used to set and cancel ASL operation, as well as to set the speed limitation, depending on the operation by the driver. The ASL operating device 26 sends a signal indicative of information according to the operation by the driver to the control apparatus 2.

The control apparatus 2 determines a throttle opening amount limit which is the maximum value of the throttle opening amount that can keep the speed of the vehicle 100 equal to or below the speed limitation set by the driver. In addition, the control apparatus 2 limits an accelerator pedal based throttle opening amount produced according to the accelerator pedal depression amount. The control apparatus 2 sends a signal indicative of the throttle opening amount after it has been limited, i.e., after a limit has been imposed, to the fuel injection system 14. Incidentally, as long as the accelerator pedal based throttle opening amount produced according to the accelerator pedal depression amount is equal to or less than the throttle opening amount limit, the throttle opening amount is not limited at that time. Accordingly, a signal indicative of the throttle opening amount according to the accelerator pedal depression amount is sent to the fuel injection system 14.

Also, the control apparatus 2 executes shift control for selecting the optimum speed of the automatic transmission 8 according to the throttle opening amount sent to the fuel injection device 14 (i.e., the throttle opening amount after the limit was imposed), the vehicle speed, and the shift position, and the like.

In particular, the control apparatus 2 according to the first example embodiment of the invention compares a vehicle speed difference of the vehicle speed with respect to the speed limitation with a predetermined threshold value and prohibits the automatic transmission 8 from shifting speeds if the vehicle speed difference is less than the predetermined threshold value. This prevents a downshift (i.e., the selection of a speed with a larger reduction ratio) and an upshift (i.e., the selection of a speed with a smaller reduction ratio) from being performed in succession when the vehicle speed is near the speed limitation. Incidentally, the predetermined threshold value is determined taking into account the increase in the speed of the vehicle 100 that accompanies an increase in torque from a downshift.

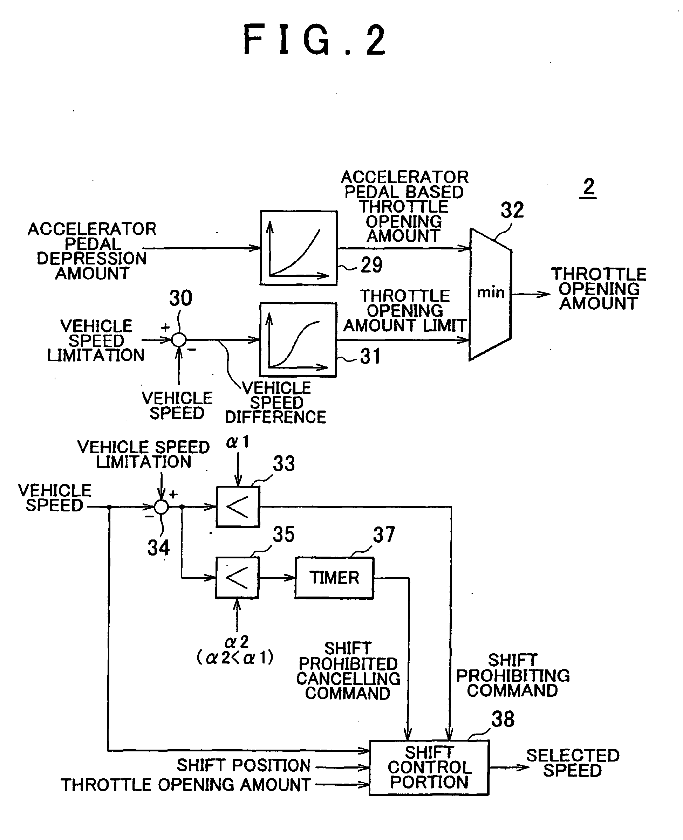

FIG. 2 is a functional block diagram of the control structure of the control apparatus 2 according to the first example embodiment of the invention.

Referring to FIG 2, the control structure of the control apparatus 2 includes a throttle opening amount characteristics storing portion 29, a subtracting portion 30, a limitation characteristics storing portion 31, and a minimum value selecting portion (min) 32. These portions work in cooperation to realize the ASL function.

The throttle opening amount characteristics storing portion 29 stores a relationship between the accelerator pedal depression amount and the accelerator pedal based throttle opening amount in a format such as a map. The throttle opening amount characteristics storing portion 29 produces and outputs the accelerator pedal based throttle opening amount according to the accelerator pedal depression amount according to an accelerator operation by the driver.

The subtracting portion 30 calculates the vehicle speed difference by subtracting the vehicle speed detected by the vehicle speed sensor 20 from the speed limitation set by the driver. The limitation characteristics storing portion 31 stores a relationship between the vehicle speed difference and the throttle opening amount limit in a format such as a map and determines the throttle opening amount limit which is the maximum value of the throttle opening amount that can keep the vehicle speed equal to or below the speed limitation. Incidentally, the throttle opening amount limit output by the limitation characteristics storing portion 31 becomes smaller as the vehicle speed difference becomes smaller. The minimum value selecting portion 32 receives signals indicative of the accelerator pedal based throttle opening amount and the throttle opening amount limit and sets the smaller of the two values as the throttle opening amount, which it then outputs to the fuel injection system 14 (FIG. 1).

As described above, if the throttle opening amount limit is greater than the accelerator pedal based opening amount, the minimum value selecting portion 32 outputs the accelerator pedal based throttle opening amount as the throttle opening amount. On the other hand, if the accelerator pedal based throttle opening amount is greater than the throttle opening amount limit, the minimum value selecting portion 32 outputs the throttle opening amount limit as the throttle opening amount. Therefore, the throttle opening amount output by the minimum value selecting portion 32 will not exceed the throttle opening amount limit. In this way, the vehicle speed of the vehicle 100 is kept equal to or below the speed limitation by reducing the throttle opening amount to suppress the driving force generated by the engine 4 when the vehicle speed of the vehicle 100 approaches the speed limitation.

Furthermore, the control structure of the control apparatus 2 also includes a shift control portion 38, a subtracting portion 34, comparing portions 33 and 35, and a timer 37.

The shift control portion 38 determines the optimum speed according to the running state of the vehicle 100 based on, for example, the throttle opening amount selected by the minimum value selecting portion 32, the vehicle speed of the vehicle 100, and the shift position, and the like, and then outputs a command indicative of the selected speed to the automatic transmission 8.

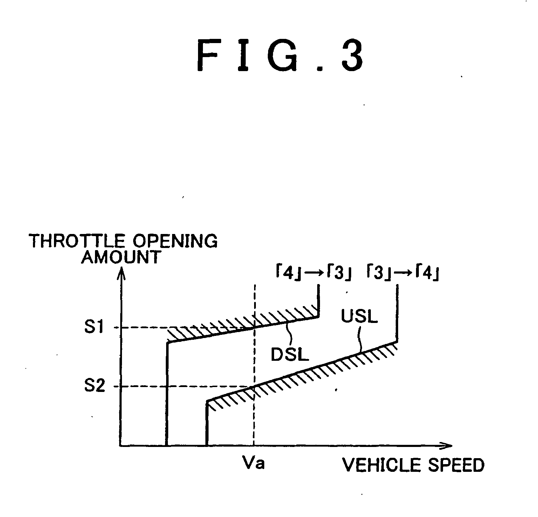

FIG 3 is a diagram schematically showing a shift operation. Referring to FIG. 3, the shift control portion 38 performs a shift operation (i.e., a downshift or an upshift) based on a shift line specified according to the vehicle speed. Incidentally, although only a downshift line DSL for downshifting from 4th speed to 3rd speed and an upshift line USL for upshifting from 3rd speed to 4th speed are shown in the example in FIG 3, in actuality shift lines are specified for each speed.

Referring to the downshift DSL line, if the throttle opening amount exceeds a predetermined value S1 while the vehicle 100 is running at vehicle speed Va in 4th speed, the shift control portion 38 downshifts from 4th speed to 3rd speed to increase the torque produced by the driving wheels 12.

On the other hand, referring to the upshift line USL, if the throttle opening amount falls below a predetermined value S2 while the vehicle 100 is running at vehicle speed Va in 3rd speed, the shift control portion 38 upshifts from 3rd speed to 4th speed to reduce the speed of the engine 4 and improve fuel efficiency.

Moreover, as will be described later, when a command to prohibit a shift (hereinafter also referred to as a "shift prohibiting command") is output, the shift control portion 38 maintains the speed that is selected at that time, i.e., does not shift speeds of the automatic transmission 8. On the other hand, when a command to cancel a shift prohibiting command (hereinafter also referred to as a "shift prohibited cancelling command") is output, the shift control portion 38 performs a shift operation obtained based on one of the shift lines shown in FIG 3.

Referring back to FIG. 2 again, the subtracting portion 34, the comparing portions 33 and 35, and the timer 37 work together and output shift prohibiting commands and shift prohibited cancelling commands to the shift control portion 38. The subtracting portion 34 calculates the vehicle speed difference by subtracting the vehicle speed detected by the vehicle speed sensor 20 from the speed limitation set by the driver. The comparing portion 33 compares the vehicle speed difference calculated by the subtracting portion 34 with a threshold value α1 and outputs a shift prohibiting command to the shift control portion 38 if the vehicle speed difference is less than the threshold value α1. Also, the comparing portion 35 compares the vehicle speed difference calculated by the subtracting portion 34 with a threshold value α2 (α2 < α1) and outputs an activation command to activate the timer 37 if the vehicle speed difference is less than the second threshold value α2. If the activation command from the comparing portion 35 continues to be output for a predetermined period of time, the timer 37 then outputs a shift prohibited cancelling command to the shift control portion 38.

Incidentally, the timer 37 may also output a shift prohibited cancelling command to the shift control portion 38 even if it is only determined that the vehicle speed difference is less than the threshold value α2. Further, the timer 37 may simply output a shift prohibited cancelling command to the shift control portion 38 once a predetermined period of time has passed after the shift prohibiting command was output to the shift control portion 38.

As described above, when the vehicle speed of the vehicle 100 is within the range of the threshold value α1 from the speed limitation, it is highly likely that an upshift and a downshift will be performed in succession so a shift operation in the shift control portion 38 is prohibited. Also, when the vehicle speed of the vehicle 100 is within the range of the threshold value α2 (the threshold value α2 is less than the threshold value α1) from the speed limitation, it is thought that the throttle opening amount limit is sufficiently small and a sudden change in the throttle opening amount according to an accelerator operation by the driver is unlikely so normal shift operation resumes. Limiting the shift operation in this manner makes it possible to avoid upshifting and downshifting from being performed in succession which may be unsettling for the driver.

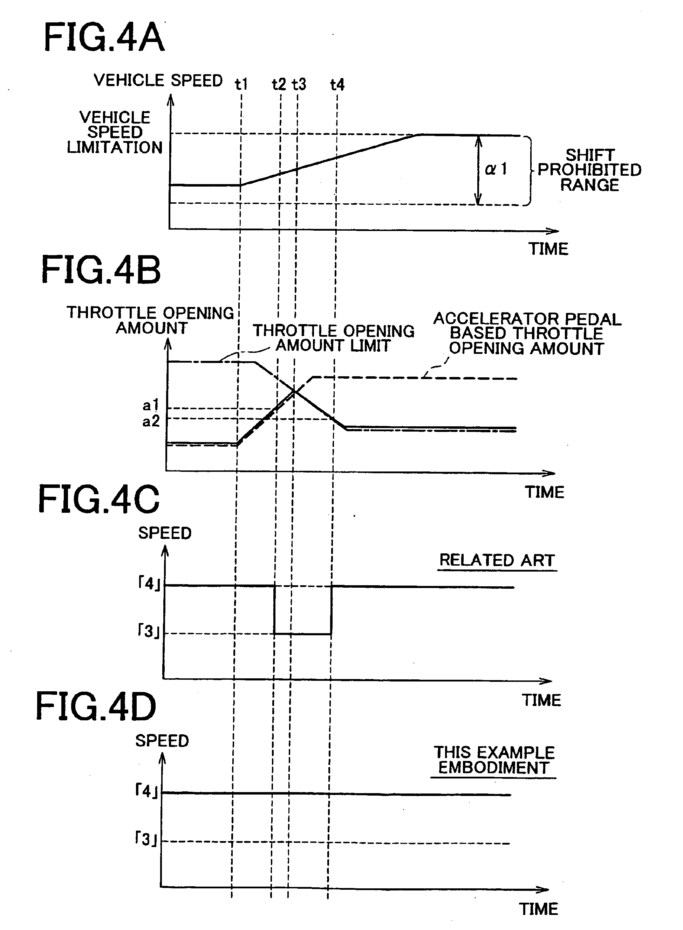

FIGS. 4A to 4D are time charts showing ASL operation according to the first example embodiment of the invention. FIG 4A shows the change over time in the vehicle speed and the speed limitation. FIG 4B shows the change over time in the throttle opening amount. FIG 4C shows the change over time in the speed selected by the automatic transmission in related art. FIG 4D shows the change over time in the speed selected by the automatic transmission 8 in this example embodiment.

An example in which the driver depresses the accelerator pedal 22 while the vehicle speed of the vehicle 100 is within the threshold value α1 from the speed limitation, i.e., is within a shift prohibited range, will be described with reference to FIG 4A. Incidentally, the automatic transmission 8 is in 4th speed before the accelerator pedal 22 is depressed.

As shown in FIG 4B, at time t1 when the driver starts to depress the accelerator pedal 22, the accelerator pedal based throttle opening amount starts to increase. At this time, the vehicle speed difference of the vehicle speed with respect to the speed limitation is relatively large so there is sufficient room for the accelerator pedal based throttle opening amount to increase with respect to the throttle opening amount limit. Therefore, the throttle opening amount increases to match the accelerator pedal based throttle opening amount.

Referring to FIG 4C, in the related art, if, as a result of the increase in the accelerator pedal based throttle opening amount, the throttle opening amount exceeds a predetermined value a1 that is determined according to the vehicle speed based on the downshift line, the shift control portion 38 outputs a command to downshift (i.e., a downshift command) and the automatic transmission 8 downshifts from 4th speed to 3rd speed (time t2). Then the throttle opening amount limit is reduced because the vehicle speed of the vehicle 100 approaches the speed limitation, and at time t3 the accelerator pedal based throttle opening amount is made to match the throttle opening amount limit. Furthermore, because the throttle opening amount limit is reduced, the throttle opening amount matches the throttle opening amount limit at time t3 and thereafter. As a result, the throttle opening amount that was increased from time t1 to time t3 starts to be reduced from time t3. When, as a result being reduced, the throttle opening amount falls below a predetermined value a2 that is determined according to the vehicle speed based on the upshift line, the shift control portion 38 outputs a command to upshift (i.e., an upshift command) and the automatic transmission 8 shifts from 3rd speed to 4th speed (time t4).

In this way, with the related art, a downshift from 4th speed to 3rd speed and an upshift from 3rd speed to 4th speed are performed in succession within a short period of time.

On the other hand, referring to FIG 4D, in this example embodiment, a shift prohibiting command is output if the vehicle speed of the vehicle 100 is within the shift prohibited range. As a result, the downshift and upshift are not performed in succession within a short period of time as they are with the related art shown in FIG 4C so an unsettling feeling is not imparted to the driver. Also, a shift operation is not performed so the vehicle speed of the vehicle 100 can more stably converge on the speed limitation.

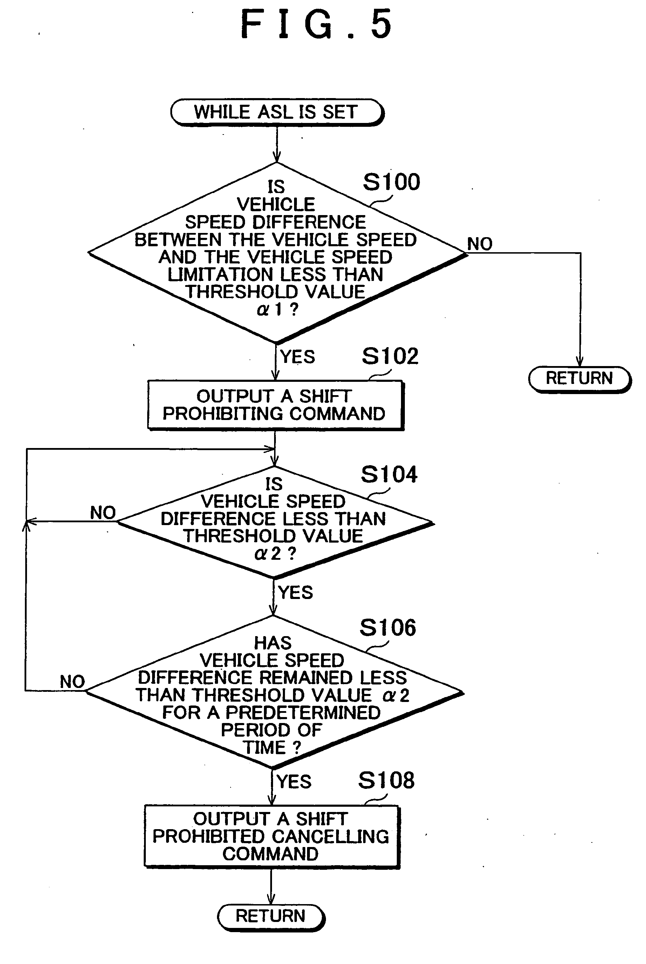

FIG 5 is a flowchart illustrating a routine of ASL operation according to the first example embodiment of the invention.

Referring to FIG 5, the control apparatus 2 executes the following routine in the period during which ASL operation is set. First, the control apparatus 2 determines whether the vehicle speed difference between the vehicle speed and the speed limitation is less than the threshold value α1 (step S100). If the vehicle speed difference is greater than the threshold value α1 (i.e., NO in step S100), the control apparatus 2 returns and starts the routine in the flowchart over.

If, on the other hand, the vehicle speed difference is less than the threshold value α1 (i.e., YES in step S100), the control apparatus 2 outputs a shift prohibiting command (step S102). Next, the control apparatus 2 determines whether the vehicle speed difference is less than the threshold value α2 (step S104).

If the vehicle speed difference is not less than the threshold value α2 (i.e., NO in step S104), the control apparatus 2 waits until the vehicle speed difference becomes less than the threshold value α2 (step S104).

If the vehicle speed difference is less than the threshold value α2 (i.e., YES in step S104), the control apparatus 2 determines whether the vehicle speed difference has continued to be less than the threshold value α2 for a predetermined period of time (step S106).

If the vehicle speed difference has not continued to be less than the threshold value α2 for the predetermined period of time (i.e., NO in step S106), the control apparatus 2 executes steps S 104 and thereafter again.

If, on the other hand, the vehicle speed difference has continued to be less than the threshold value α2 for the predetermined period of time (i.e., YES in step S 106), the control apparatus 2 outputs a shift prohibited cancelling command (step S108). Then the control apparatus 2 returns to the beginning of the routine in the flowchart.

In this first example embodiment of the invention, the engine 4 can be regarded as the driving force source and the automatic transmission 8 can be regarded as the transmission. Also, the vehicle speed sensor 20 can be regarded as the vehicle speed detecting means, the subtracting portion 30 and the limitation characteristics storing portion 31 can be regarded as the limitation value determining means, the minimum value selecting portion 32 can be regarded as the limiting means, the shift control portion 38 can be regarded as the shift controlling means, the comparing portion 33 can be regarded as the first comparing means and the shift prohibiting means, and the comparing portion 35 can be regarded as the second comparing portion and the cancelling means.

According to this first example embodiment of the invention, a command to prohibit the automatic transmission 8 from shifting speeds is output when the vehicle speed difference is less than the threshold value α1, i.e., when the vehicle speed is close to within the threshold value α1 from the speed limitation. As a result, a downshift will not be performed even if the driver greatly depresses the accelerator pedal 22. Therefore, an upshift associated with the throttle opening amount being limited due to the vehicle speed nearing the speed limitation will also not be performed in succession. Hence it is possible to avoid a decline in drivability that may otherwise occur from frequent shift operations so drivability is not sacrificed while a speed limitation is imposed.

Also according to this first example embodiment, after a shift prohibiting command has been output, a shift prohibited cancelling command is output when the vehicle speed difference is less than the threshold value α2 (< α1), i.e., when it can be determined that the vehicle speed has substantially converged on the speed limitation. In this state, the throttle opening amount is limited by the sufficiently small throttle opening amount limit so the throttle opening amount is unlikely to change suddenly due to an accelerator operation by the driver. Therefore, an upshift and a downshift performed in succession are unlikely to occur immediately after a shift prohibited cancelling command has been output. Hence it is possible to avoid a decline in drivability that may otherwise occur from frequent shift operations so drivability is not sacrificed while a speed limitation is imposed.

### [First modified example of the first example embodiment]

The foregoing first example embodiment of the invention illustrates a structure that outputs a shift prohibiting command based only on the vehicle speed difference between the vehicle speed and the speed limitation. Alternatively, however, the structure may be such that a shift prohibiting command is output taking a condition for a further downshift into account. That is, in a first modified example of the first example embodiment of the invention, a condition that the increase rate over time in the accelerator pedal depression amount be greater than a predetermined threshold value is added as a condition for outputting the shift prohibiting command. Adding this condition makes it possible to prohibit a shift only when a downshift is likely to occur, therefore enabling a shift prohibiting command to be output in a more appropriate manner.

A vehicle provided with a control apparatus 2A according to the first modified example of the first example embodiment of the invention is the same as the vehicle provided with the control apparatus 2 according to the first example embodiment of the invention shown in FIG. 1 so a detailed description thereof will not be repeated.

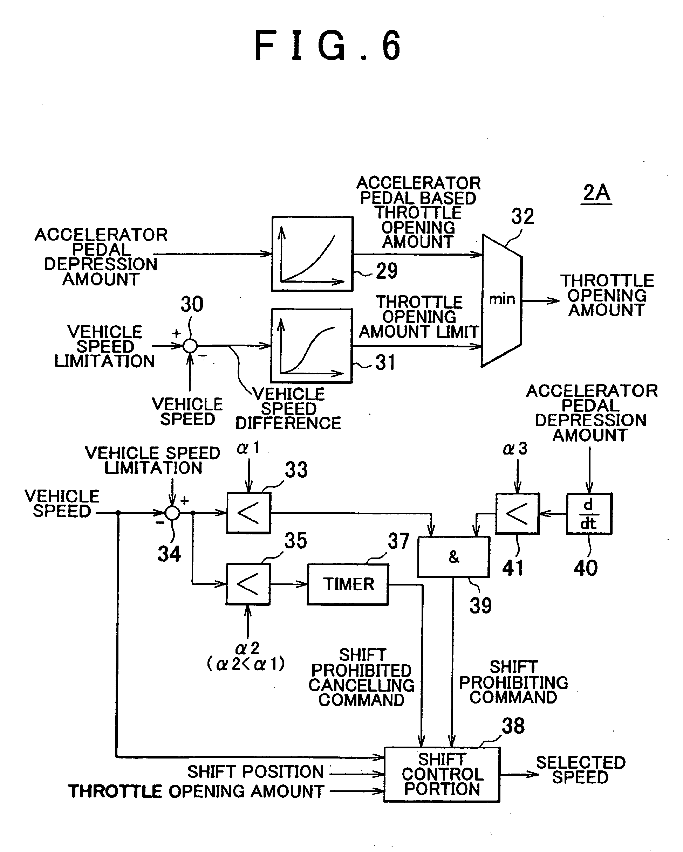

FIG 6 is a functional block diagram of the control structure of the control apparatus 2A according to the first modified example of the first example embodiment of the invention.

Referring to FIG 6, the control structure of the control apparatus 2A is equivalent to the control structure of the control apparatus 2 shown in FIG 2 with the additions of a portion for detecting the rate of increase over time (hereinafter simply referred to as the "increase rate detecting portion") 40, a comparing portion 41, and an AND operation (i.e., logical multiplication) portion 39.

The increase rate detecting portion 40 detects the increase rate over time (hereinafter also referred to simply as "increase rate") in the accelerator pedal depression amount of an accelerator operation by the driver and outputs a signal indicative thereof to the comparing portion 41. The comparing portion 41 compares the increase rate output from the increase rate detecting portion 40 with a threshold value α3 and outputs an activation command if the increase rate is greater than the threshold value α3. Incidentally, the threshold value α3 is determined according to an upshift value produced by a downshift in the shift control portion 38. That is, the threshold value α3 is set such that it is possible to detect beforehand when a downshift might occur in the shift control portion 38.

The AND operation portion 39 is interposed between the shift control portion 38 and the comparing portions 33 and 41, and outputs a shift prohibiting command only when an activation command is being output from both the comparing portions 33 and 41. That is, the AND operation portion 39 outputs a shift prohibiting command when the vehicle speed difference calculated by the subtracting portion 34 is less than the threshold value α1 and the rate of increase over time in the accelerator pedal depression amount is greater than the threshold value α3.

The rest of the control structure of the control apparatus 2A according to the first modified example of the first example embodiment of the invention is the same as the control structure of the control apparatus 2 according to the foregoing first example embodiment of the invention so a detailed description thereof will not be repeated. Also, except for the condition for outputting the shift prohibiting command, the routine of the ASL operation according to the first modified example of the first example embodiment of the invention is the same as that shown in FIG. 5 described above so a detailed description thereof will not be repeated.

In the first modified example of the first example embodiment of the invention, the increase rate detecting portion 40 can be regarded as the detecting means, the comparing portion 41 can be regarded as the third comparing means, and the AND operation portion 39 can be regarded as the prohibiting condition determining means.

According to the first modified example of the first example embodiment of the invention, in addition to the effects of the first example embodiment of the invention described above, a shift prohibiting command is not output when it is unnecessary because it is output only when a downshift is likely to occur in the shift control portion 38 due to an increase in the accelerator pedal depression amount.

### [Second modified example of the first example embodiment]

The foregoing first example embodiment describes an example of a structure that outputs a shift prohibited cancelling command only when the vehicle speed has continued to be near the speed limitation for a predetermined period of time. Alternatively, however, the structure may be such that a shift prohibited cancelling command is output taking an accelerator operation of the driver into account. That is, in the second modified example of the first example embodiment of the invention, a condition that a predetermined period of time has passed after the shift prohibiting command was output is used as the condition for outputting a shift prohibited cancelling command. This is because as the vehicle speed approaches the speed limitation after the shift prohibiting condition is satisfied by the increase in vehicle speed from the driver depressing the accelerator pedal, the driver will often instinctively ease up on the accelerator pedal so the possibility of the automatic transmission 8 downshifting becomes less likely.

A vehicle provided with a control apparatus 2B according to the second modified example of the first example embodiment of the invention is the same as the vehicle provided with the control apparatus 2 according to the first example embodiment of the invention shown in FIG 1 so a detailed description thereof will not be repeated.

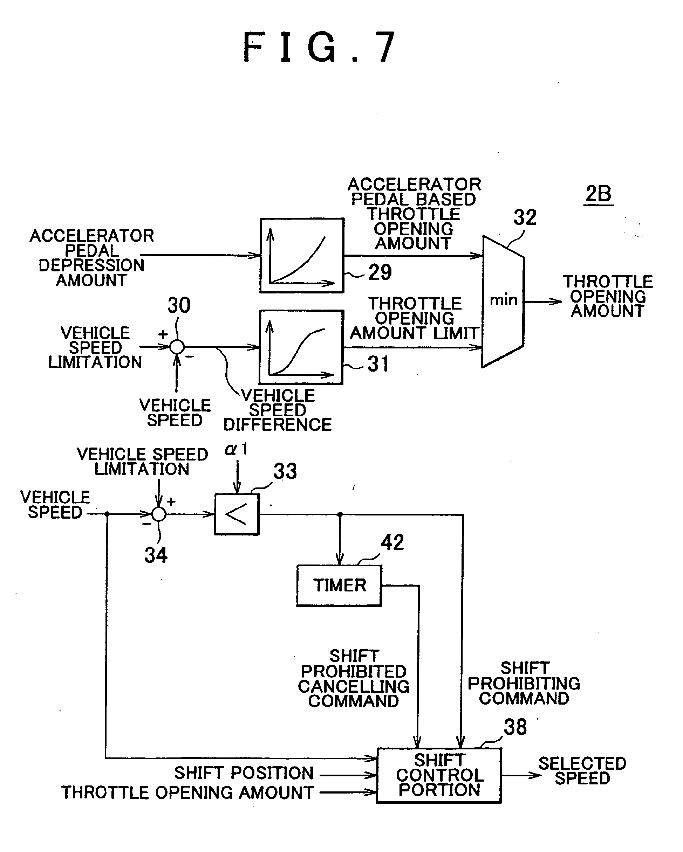

FIG 7 is a functional block diagram of the control structure of the control apparatus 2B according to the second modified example of the first example embodiment of the invention.

Referring to FIG 7, the control structure of the control apparatus 2B is equivalent to the control structure of the control apparatus 2 shown in FIG 2 with a timer 42 instead of the comparing portion 35 and the timer 37.

The timer 42 is structured to receive output from the comparing portion 33 and outputs a shift prohibited cancelling command to the shift control portion 38 when a predetermined period of time has passed after a shift prohibiting command was output by the comparing portion 33.

The rest of the control structure of the control apparatus 2B according to the first modified example of the first example embodiment of the invention is the same as the control structure of the control apparatus 2 according to the foregoing first example embodiment of the invention so a detailed description thereof will not be repeated. Also, except for the condition for outputting the shift prohibited cancelling command, the routine of the ASL operation according to the second modified example of the first example embodiment of the invention is the same as that shown in FIG 5 described above so a detailed description thereof will not be repeated.

The timer 42 in the second modified example of the first example embodiment of the invention can be regarded as the cancelling means.

According to the second modified example of the first example embodiment of the invention, in addition to the effects of the first example embodiment of the invention described above, a shift will not continue to be prohibited for an extended period of time while the condition is not satisfied because a shift prohibited cancelling command is output once a predetermined period of time has passed even if the vehicle speed is far from the speed limitation.

### [Second example embodiment]

The foregoing first example embodiment of the invention described an example of a structure that outputs a shift prohibiting command when the vehicle speed is within a shift prohibited range which is based on the speed limitation. However, when the speed limitation is relatively low, for example, the vehicle speed may approach the speed limitation due to a sudden increase in vehicle speed from a downshift even if the vehicle speed is outside of the shift prohibited range. In this kind of case as well, a downshift and an upshift may be performed in succession within a short period of time which may be unsettling for the driver. Therefore, if a downshift is performed once while the vehicle speed is outside of the shift prohibited range, i.e., at a vehicle speed at which a shift operation should not be prohibited, that downshifted state is preferably maintained to avoid imparting an unsettling feeling to the driver.

In this second example embodiment of the invention, a structure is described in which a shift operation such as that described above can be realized.

A vehicle provided with a control apparatus 2C according to the second example embodiment of the invention is the same as the vehicle provided with the control apparatus 2 according to the first example embodiment of the invention shown in FIG 1 so a detailed description thereof will not be repeated.

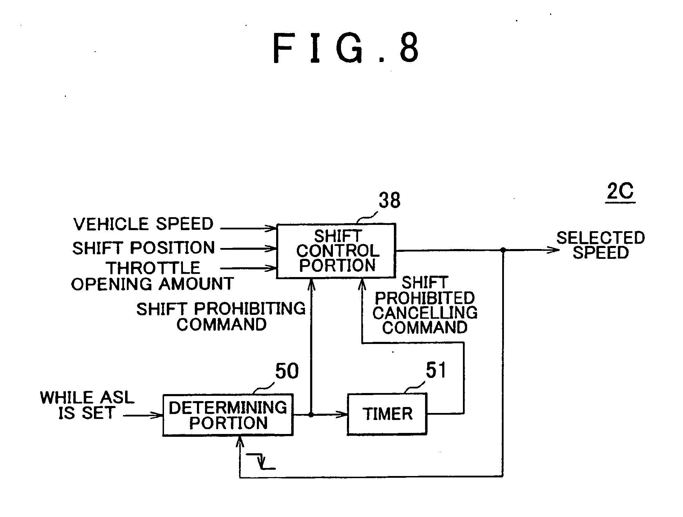

FIG 8 functional block diagram of the control structure related to prohibiting a shift in the control apparatus 2C according to the second example embodiment of the invention.

Referring to FIG 8, the control structure of the control apparatus 2C includes a shift control portion 38, a determining portion 50, and a timer 51. Incidentally, the control structure of the control apparatus 2C also includes a functional block structure (i.e., a subtracting portion 30, a limitation characteristics storing portion 31, and a minimum value selecting portion 32) for realizing the ASL function shown in FIG 2 described above.

The shift control portion 38 is described using FIG. 2 in the first example embodiment of the invention so a detailed description thereof will not be repeated.

The determining portion 50 and the timer 51 work together and output a shift prohibiting command and a shift prohibited cancelling command to the shift control portion 38. The determining portion 50 receives a selected speed command output from the shift control portion 38 and determines whether a downshift command has been output. That is, the determining portion 50 detects an operation to shift into a speed with a larger reduction ratio while ASL is set and outputs a shift prohibiting command. When a predetermined period of time has passed after the shift prohibiting command was output by the determining portion 50, the timer 41 outputs a shift prohibited cancelling command to the shift control portion 38.

According to the kind of control structure described above, when a downshift is performed as a result of an accelerator operation by the driver, a shift operation (mainly an upshift) is prohibited until a predetermined period of time has passed. As a result, an unsettling feeling caused by an upshift and a downshift being performed in succession can be avoided. Also, a speed with a larger reduction ratio that was selected by the downshift is maintained so even if the vehicle speed were to exceed the speed limitation, a vehicle speed controlling force (a so-called engine brake) would be exerted by the limitation of the throttle opening amount, thereby enabling the vehicle speed to be quickly brought down to the speed limitation.

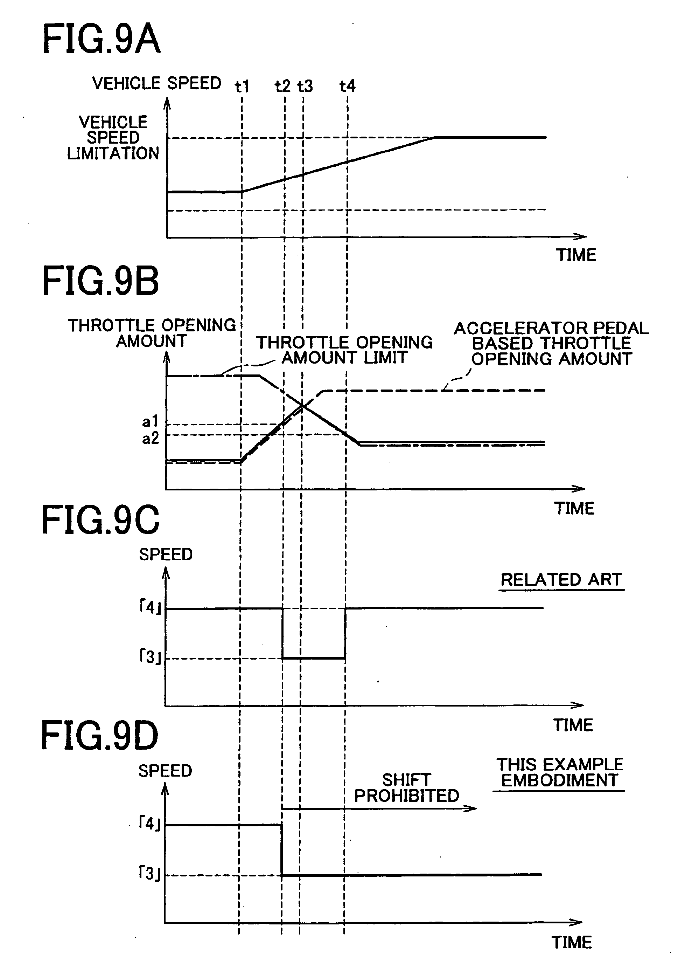

FIGS. 9A to 9D are time charts showing ASL operation according to the second example embodiment of the invention. FIG. 9A shows the change over time in the vehicle speed and the speed limitation. FIG. 9B shows the change over time in the throttle opening amount. FIG 9C shows the change over time in the speed selected by the automatic transmission in related art. FIG 9D shows the change over time in the speed selected by the automatic transmission 8 in this example embodiment.

An example in which the driver depresses the accelerator pedal 22 while the vehicle speed is under the speed limitation by a relatively large amount will be described with reference to FIG. 9A. Also, the automatic transmission 8 is in 4th speed before the accelerator pedal 22 is depressed. Incidentally, the state shown in FIG. 9A is equivalent to one in which the vehicle speed is outside the range of the threshold value α1, i.e., outside the shift prohibited range, described above in the first example embodiment of the invention.

As shown in FIG 9B, at time t1 when the driver starts to depress the accelerator pedal 22, the accelerator pedal based throttle opening amount starts to increase. At this time, the vehicle speed difference of the vehicle speed with respect to the speed limitation is relatively large so there is sufficient room for the accelerator pedal based throttle opening amount to increase with respect to the throttle opening amount limit. Therefore, the throttle opening amount increases to match the accelerator pedal based throttle opening amount.

In the related art, referring to FIG 9C, if, as a result of the increase in the accelerator pedal based throttle opening amount, the throttle opening amount exceeds a predetermined value a1 that is determined according to the vehicle speed based on the downshift line, the shift control portion 38 outputs a command to downshift (i.e., a downshift command) and the automatic transmission 8 downshifts from 4th speed to 3rd speed (time t2). Then the throttle opening amount limit is reduced because the vehicle speed approaches the speed limitation, and at time t3 the accelerator pedal based throttle opening amount is made to match the throttle opening amount limit. Furthermore, because the throttle opening amount limit is reduced, the throttle opening amount matches the throttle opening amount limit at time t3 and thereafter. As a result, the throttle opening amount that was increased from time t1 to time t3 starts to be reduced from time t3. When, as a result being reduced, the throttle opening amount falls below a predetermined value a2 that is determined according to the vehicle speed based on the upshift line, the shift control portion 38 outputs a command to upshift (i.e., an upshift command) and the automatic transmission 8 shifts from 3rd speed to 4th speed (time t4).

On the other hand, in this example embodiment, referring to FIG 9D, when a downshift is performed, a shift prohibiting command is output for a predetermined period of time. As a result, an upshift will not be performed within a short period of time as it may be with the related art. Also, even if an upshift is performed after the predetermined period of time has passed, it is presumed that if there is enough time between the downshift and the upshift, an unsettling feeling will not be imparted to the driver. Moreover, the throttle opening amount limit is thought to be small enough at the point at which the shift prohibited cancelling command is output so that an abrupt change in the throttle opening amount is unlikely. Therefore, a case in which an upshift is performed immediately after the shift prohibited cancelling command is output is thought to be unlikely.

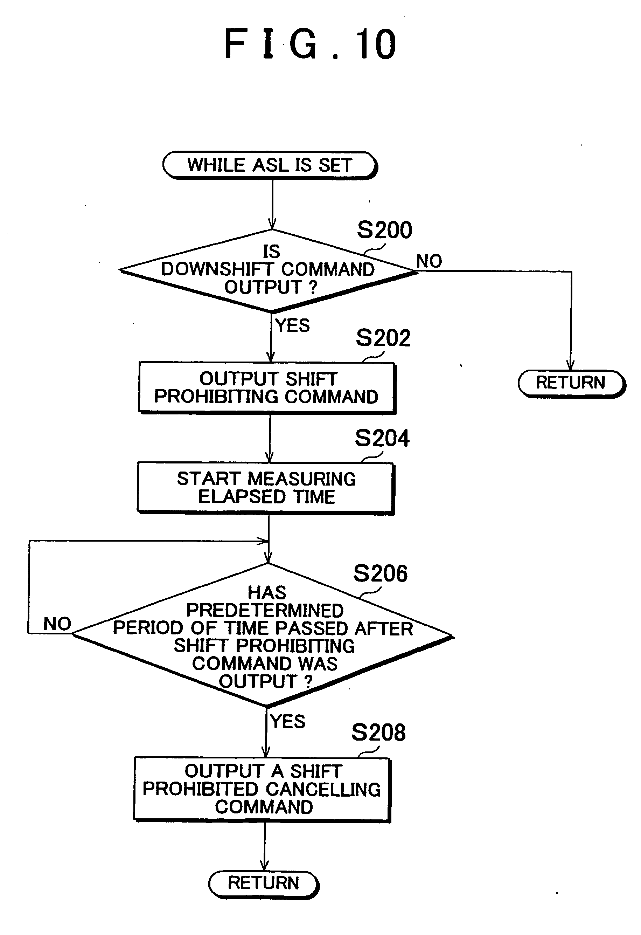

**FIG.** 10 is a flowchart illustrating a routine for ASL operation according to the second example embodiment of the invention.

Referring to FIG 10, the control apparatus 2C executes the following routine in the period during which ASL operation is set. First, the control apparatus 2C determines whether a downshift command has been output to the automatic transmission 8 (step S200). If a downshift command has not been output (i.e., NO in step S200), the control apparatus 2C returns to the beginning of the routine in the flowchart.

If, on the other hand, a downshift command has been output (i.e., YES in step S200), the control apparatus 2C outputs a shift prohibiting command (step S202). Next, the control apparatus 2C starts to measure the elapsed time (step S204).

Then the control apparatus 2C determines whether a predetermined period of time has passed after the shift was prohibited (step S206). If the predetermined period of time has not passed (i.e., NO in step S206), the control apparatus 2C waits until the predetermined period of time has passed (step S206).

When the predetermined period of time has passed (YES in step S206), the control apparatus 2C outputs a shift prohibited cancelling command (step S208). Then the control apparatus 2C returns to the beginning of the routine in the flowchart.

In the second example embodiment of the invention, the engine 4 corresponds to the driving force source and the automatic transmission 8 corresponds to the transmission. Also, the vehicle speed sensor 20 can be regarded as the vehicle speed detecting means, the subtracting portion 30 and the limitation characteristics storing portion 31 can be regarded as the limitation value determining means, the minimum value selecting portion 32 can be regarded as the limiting means, the shift control portion 38 can be regarded as the shift controlling means, the determining portion 50 can be regarded as the shift prohibiting means, and the timer 51 can be regarded as the cancelling means.

According to the second example embodiment of the invention, a shift prohibiting command is output to maintain the downshifted state when a command to shift into a speed with a larger reduction ratio (i.e., downshift) is output by the shift control portion 38. Therefore, even if the vehicle speed approaches the speed limitation and the throttle opening amount is limited, it is possible to avoid an upshift (i.e., a shift into a speed with a smaller reduction ratio) from being performed within a short period of time. Accordingly, it is possible to avoid a decrease in drivability due to frequent shift operations so drivability is not sacrificed while the vehicle speed is being limited.

Also according to the second example embodiment of the invention, a speed with a larger reduction ratio that was selected by the downshift is maintained so even if the vehicle speed were to exceed the speed limitation, a vehicle speed controlling force (a so-called engine brake) would be exerted by the limitation of the throttle opening amount, thereby enabling the vehicle speed to be quickly brought down to the speed limitation. As a result, the ability to bring the vehicle speed down to the speed limitation can also be improved.

### [First modified example of the second example embodiment]

The foregoing second example embodiment of the invention describes a structure that outputs a shift prohibiting command based only on the execution of a downshift. Alternatively, however, the structure may be such that a shift prohibiting command is output taking the speed limitation into account. That is, in a first modified example of the second example embodiment of the invention, a condition that the speed limitation be less than a predetermined threshold value is added as a condition for outputting the shift prohibiting command. Adding this condition makes it possible to prohibit a shift only when the vehicle speed is likely to exceed the speed limitation if a downshift is performed or when the driver has reduced the speed limitation while driving, for example, therefore enabling a shift prohibiting command to be output in a more appropriate manner.

A vehicle provided with a control apparatus 2D according to the first modified example of the second example embodiment of the invention is the same as the vehicle provided with the control apparatus 2 according to the first example embodiment of the invention shown in FIG. 1 so a detailed description thereof will not be repeated.

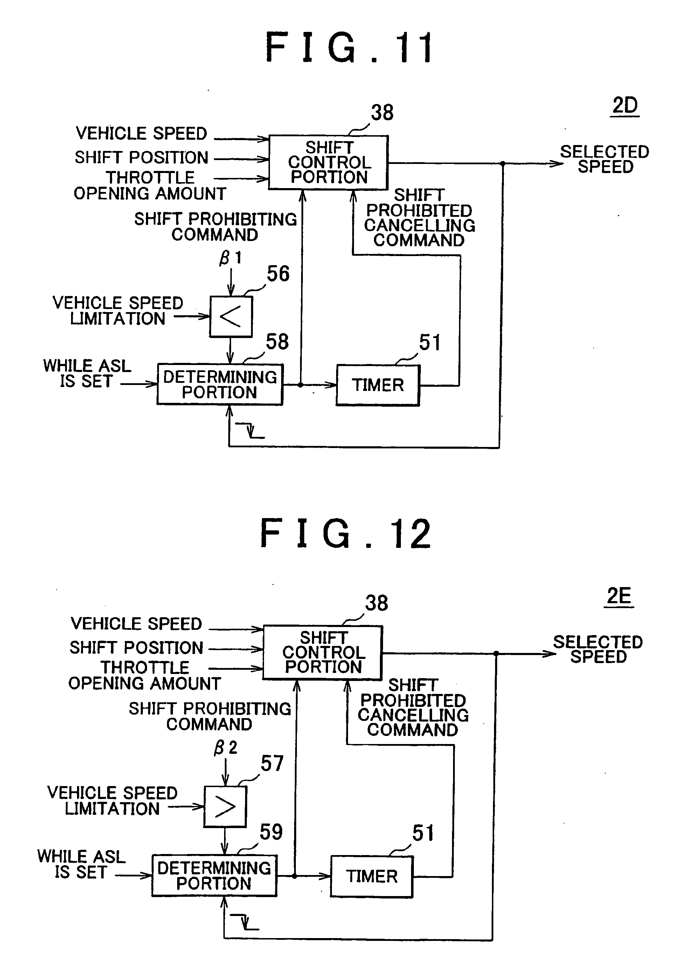

FIG 11 is a functional block diagram of the control structure related to prohibiting a shift in the control apparatus 2D according to the first modified example of the second example embodiment of the invention.

Referring to FIG 11, the control structure of the control apparatus 2D is equivalent to the control structure of the control apparatus 2C shown in FIG 8 with the addition of a determining portion 58 and a comparing portion 56 instead of the determining portion 50.

The comparing portion 56 compares the speed limitation with a threshold value β1 and outputs an activation command to the determining portion 58 if the speed limitation is less than the threshold value β1. The determining portion 58 receives the selected speed command output from the shift control portion 38 and determines whether a downshift command has been output. At the same time, the determining portion 58 also determines whether an activation command is being output from the comparing portion 56. When a downshift command has been output and the activation command has been output from the comparing portion 56 while the ASL is set, the determining portion 58 outputs a shift prohibiting command.

The rest of the control structure of the control apparatus 2D according to the first modified example of the second example embodiment of the invention is the same as the control structure of the control apparatus 2C according to the foregoing second example embodiment of the invention so a detailed description thereof will not be repeated. Also, except for the condition for outputting the shift prohibiting command, the routine of the ASL operation according to the first modified example of the second example embodiment of the invention is the same as that shown in FIG 10 described above so a detailed description thereof will not be repeated.

In the first modified example of the second example embodiment of the invention, the determining portion 58 and the comparing portion 56 can be regarded as the shift prohibiting means, the comparing portion 56 can be regarded as the second comparing means, the determining portion 58 can be regarded as the prohibiting condition determining means, and the timer 51 can be regarded as the cancelling means.

According to the first modified example of the second example embodiment of the invention, in addition to the effects of the second example embodiment of the invention described above, a shift prohibiting command is not output when it is unnecessary because it is output only when the speed limitation is low and there is a possibility of the vehicle speed exceeding the speed limitation if a downshift is performed, or when the speed limitation has been reduced by an operation by the driver, for example.

### [Second modified example of the second example embodiment]

The foregoing second example embodiment describes an example of a structure that outputs a shift prohibiting command based only on the execution of a downshift. Alternatively, however, the structure may be such that a shift prohibiting command is output taking the vehicle speed into account. That is, in a second modified example of the second example embodiment of the invention, a condition that the vehicle speed be greater than a predetermined threshold value is added as a condition for outputting a shift prohibiting command. Adding this condition makes it possible to prevent a shift from being prohibited from the time the vehicle takes off from a standstill until it accelerates to the threshold value so that normal take off operation will not be effected.

A vehicle provided with a control apparatus 2E according to the second modified example of the second example embodiment of the invention is the same as the vehicle provided with the control apparatus 2 according to the first example embodiment of the invention shown in FIG 1 so a detailed description thereof will not be repeated.

FIG 12 is a functional block diagram of the control structure related to prohibiting a shift in the control apparatus 2E according to the second modified example of the second example embodiment of the invention.

Referring to FIG 12, the control structure of the control apparatus 2E is equivalent to the control structure of the control apparatus 2C shown in FIG 8 with the addition of a determining portion 59 and a comparing portion 57 instead of the determining portion 50.

The comparing portion 57 compares the vehicle speed with a threshold value β2 and outputs an activation command to the determining portion 59 if the vehicle speed is greater than the threshold value β2. The determining portion 59 receives the selected speed command output from the shift control portion 38 and determines whether a downshift command has been output. At the same time, the determining portion 59 also determines whether the activation command is being output from the comparing portion 57. When a downshift command has been output and the comparing portion 57 has output an activation command while the ASL is set, the determining portion 59 outputs a shift prohibiting command. The rest of the control structure of the control apparatus 2E according to the second modified example of the second example embodiment of the invention is the same as the control structure of the control apparatus 2C according to the foregoing second example embodiment of the invention so a detailed description thereof will not be repeated. Also, except for the condition for outputting the shift prohibiting command, the routine of the ASL operation according to the second modified example of the second example embodiment of the invention is the same as that shown in FIG 10 described above so a detailed description thereof will not be repeated.

In the second modified example of the second example embodiment of the invention, the determining portion 59 and the comparing portion 57 can be regarded as the shift prohibiting means, the comparing portion 57 can be regarded as the third comparing means, the determining portion 59 can be regarded as the prohibiting condition determining means, and the timer 51 can be regarded as the cancelling means.

According to the second modified example of the second example embodiment of the invention, in addition to the effects of the second example embodiment of the invention described above, a shift prohibiting command is output only when the vehicle speed is greater than the predetermined threshold value β2. In other words, a shift prohibiting command will not be output until the vehicle speed reaches the threshold value β2. As a result, a take off operation in which the vehicle accelerates to the threshold value β2 after taking off from a standstill will not be affected.

### [Third modified example of the second example embodiment]

The foregoing second example embodiment describes an example of a structure that outputs a shift prohibited cancelling command after a predetermined period of time has passed after the shift prohibiting command was output. Alternatively, however, the structure may be such that a shift prohibited cancelling command is output after determining whether the vehicle speed has converged on the speed limitation. That is, in a third modified example of the second example embodiment of the invention, a condition that the vehicle speed difference between the vehicle speed and the speed limitation be less than a predetermined threshold value is added as a condition for outputting a shift prohibited cancelling command. When this condition is satisfied, it means that the vehicle speed is in a range within which it can be determined as having converged on the speed limitation. In such a state, the throttle opening amount is also stable and a downshift and an upshift are unlikely to be performed in succession, for example.

A vehicle provided with a control apparatus 2F according to the third modified example of the second example embodiment of the invention is the same as the vehicle provided with the control apparatus 2 according to the first example embodiment of the invention shown in FIG 1 so a detailed description thereof will not be repeated.

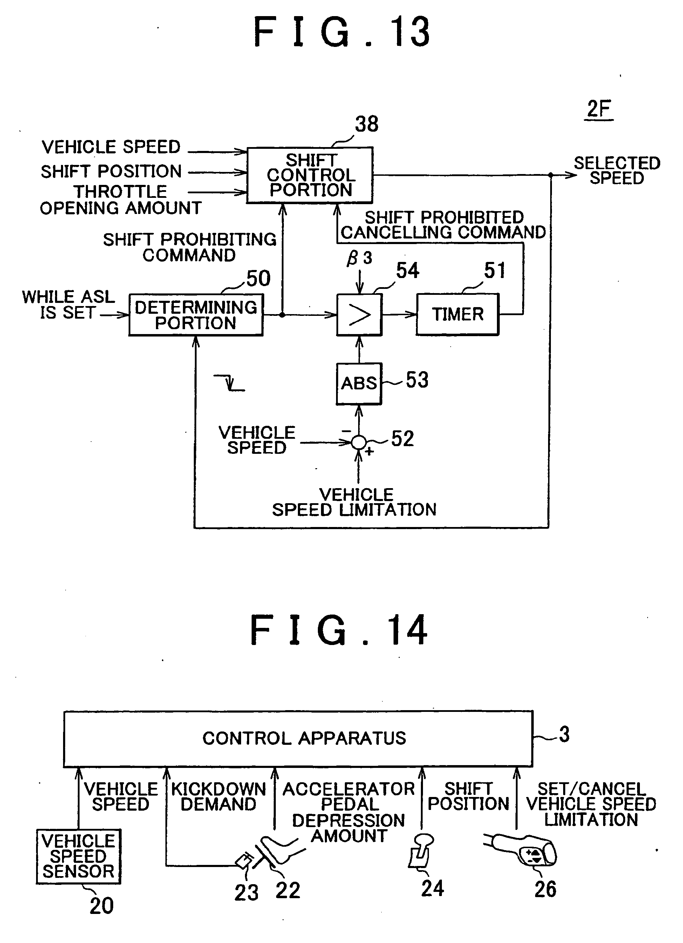

FIG 13 is a functional block diagram of the control structure related to prohibiting a shift in the control apparatus 2F according to the third modified example of the second example embodiment of the invention.

Referring to FIG 13, the control structure of the control apparatus 2F is equivalent to the control structure of the control apparatus 2C shown in FIG 8 with the addition of a subtracting portion 52, an absolute value converting portion (ABS) 53, and a comparing portion 54.

The subtracting portion 52 calculates the vehicle speed difference by subtracting the vehicle speed detected by the vehicle speed sensor 20 from the speed limitation set by the driver. The absolute value converting portion 53 outputs the absolute value of the vehicle speed difference output from the subtracting portion 52 to the comparing portion 54. That is, the absolute value converting portion 53 outputs information only pertaining to the size of the vehicle speed difference to the comparing portion 54. The comparing portion 54 compares the vehicle speed difference (i.e., the size thereof) output from the absolute value converting portion 53 with a threshold value β3 and outputs an activation command to the timer 55 if the vehicle speed difference (i.e., the size thereof) is less than the threshold value β3. Also, because the comparing portion 54 becomes activated when an activation command is output from the determining portion 50, it executes the foregoing steps after the determining portion 50 outputs a shift prohibiting command. Then the timer 51 outputs a shift prohibited cancelling command to the shift control portion 38 when a predetermined period of time has passed after the activation command was output by the comparing portion 54. Accordingly, the shift prohibited cancelling command is output after a shift prohibiting command has been output when the vehicle speed difference is less than the threshold value β3 and this state has continued for a predetermined period of time.

The rest of the control structure of the control apparatus 2F according to the third modified example of the second example embodiment of the invention is the same as the control structure of the control apparatus 2C according to the foregoing second example embodiment of the invention so a detailed description thereof will not be repeated. Also, except for the condition for outputting the shift prohibited cancelling command, the routine of the ASL operation according to the third modified example of the second example embodiment of the invention is the same as that shown in FIG 10 described above so a detailed description thereof will not be repeated.

In the third modified example of the second example embodiment of the invention, the determining portion 50 can be regarded as the shift prohibiting means, the comparing portion 54 can be regarded as the first comparing means, and the timer 51 can be regarded as the cancelling means.

According to the third modified example of the second example embodiment of the invention, in addition to the effects of the second example embodiment of the invention described above, it is possible to avoid a downshift and an upshift from being performed in succession immediately after a shift prohibited cancelling command is output because it is output after the vehicle speed difference between the vehicle speed and the speed limitation has become less than the threshold value β3, i.e., when the throttle opening amount is stable, after a shift prohibiting command was output.

Incidentally, the structure used may also be such that the condition to output the shift prohibiting command described in the second example embodiment of the invention as well as the first and second modified examples thereof may be appropriately combined with the condition to output the shift prohibited cancelling command described in the second example embodiment of the invention as well as the third modified example thereof.

Furthermore, the structures described in the second example embodiment of the invention and the modified examples thereof may also be combined with the structures described in the first example embodiment of the invention.

### [Third example embodiment]

A function for temporarily cancelling the ASL setting may also be added to the structures of the first and second example embodiments of the invention described above. This kind of function is effective when it is necessary to temporarily travel at a speed that exceeds the speed limitation while the ASL is set. Examples of such a time might be when getting out of the way of an emergency vehicle or the like or when avoiding danger.

As a method for temporarily cancelling the ASL setting, this example embodiment employs a structure that uses a kickdown switch arranged in a position that the accelerator pedal reaches when it is depressed a predetermined amount.

The vehicle provided with a control apparatus 3 according to this third example embodiment of the invention differs, as shown in FIG. 14 described below, from the vehicle provided with the control apparatus 2 according to the first example embodiment of the invention shown in FIG 1 only with respect to the portions related to the control apparatus 2. The structure of the rest of the vehicle is the same as the structure in the first example embodiment of the invention shown in FIG 1 so a detailed description thereof will not be repeated.

FIG 14 is a block diagram schematically showing the main portions related to the control apparatus 3 according to the third example embodiment of the invention.

Referring to FIG 14, the control apparatus 3 receives signals from the vehicle speed sensor 20, the accelerator pedal 22, the shift lever 24, and the ASL operating device 26, all of which are described above. In addition, the control apparatus 3 also receives a kickdown signal from a kickdown switch 23 arranged in a position where it will be contacted by the accelerator pedal 22 when the accelerator pedal 22 is depressed a predetermined amount.

The original function of the kickdown switch 23 is to trigger a downshift to increase the amount of torque generated from the driving wheels at times such as when the driver wishes the vehicle to accelerate. In this example embodiment, however, the kickdown switch also functions to temporarily cancel the ASL setting when the ASL is set.

In order to temporarily cancel the ASL setting using the kickdown switch, it is necessary to depress the accelerator pedal 22 until it pushes against the kickdown switch 23. Therefore, after the kickdown switch 23 has been pushed, a kickdown shift is performed and the ASL setting is cancelled so the throttle opening amount quickly increases to the accelerator pedal based throttle opening amount. Accordingly, the driving force from the engine and the amount of torque generated from the driving wheels abruptly increase, making it easy for the vehicle to quickly accelerate.

However, particularly in a vehicle provided with an engine with relatively large displacement, a downshift occurs at the same time despite the fact that sufficient acceleration force is obtained from the amount of increase in the throttle opening amount so more acceleration force than is required by the driver may be generated.

Here, according to this example embodiment, when the kickdown switch 23 being pushed and the ASL setting is temporarily cancelled, a shift operation (mainly a downshift) is prohibited to inhibit excess acceleration force from being generated.

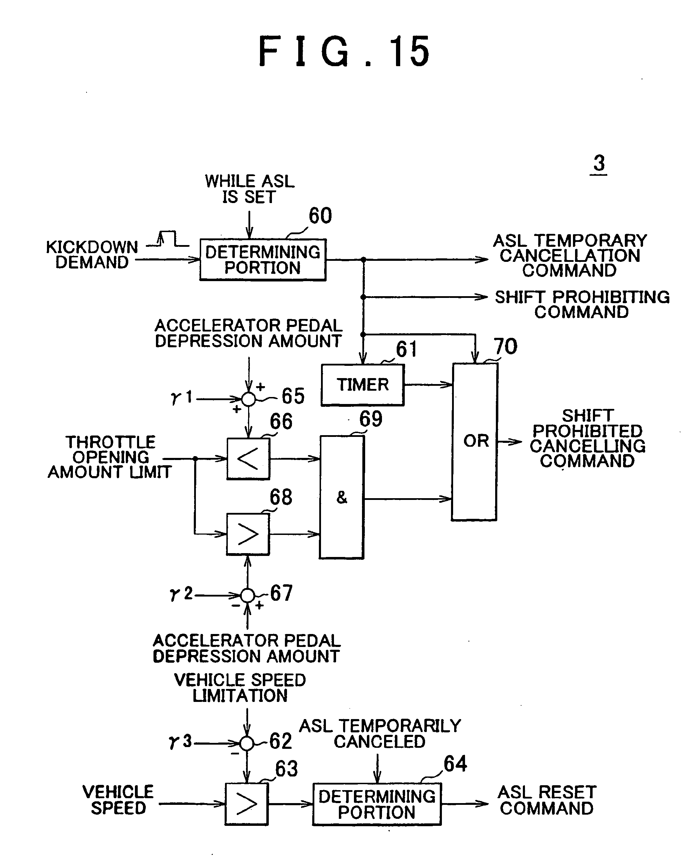

FIG 15 is a functional block diagram of the control structure of the control apparatus 3 according to the third example embodiment of the invention. Incidentally, the control structure of the control apparatus 3 also includes a functional block structure (i.e., a throttle opening amount characteristics storing portion 29, a subtracting portion 30, a limitation characteristics storing portion 31, and a minimum value selecting portion 32) for realizing the ASL function shown in FIG 2 described above.

Referring to FIG 15, the control structure of the control apparatus 3 includes determining portions 60 and 64, a subtracting portion 62, and a comparing portion 63. These portions realize the function related to temporarily cancelling and resetting ASL.

The determining portion 60 outputs an ASL temporary cancellation command in response to a kickdown demand from the kickdown switch 23 while the ASL is set. Incidentally, the kickdown demand is determined based on the kickdown switch 23 being changed from off to on. Temporarily cancelling ASL in this way cancels the limitation imposed on the throttle opening amount so that a throttle opening amount that matches the accelerator pedal based throttle opening amount can be output.

After the ASL is temporarily cancelled, ASL is then reset when the vehicle speed is a predetermined value under the speed limitation. More specifically, the subtracting portion 62 outputs a signal indicative of the difference between the speed limitation and a threshold value γ3 to the comparing portion 63. This value that is output to the comparing portion 63 is used to determine whether to restart ASL. Then the comparing portion 63 compares the value output from the subtracting portion 62 with the vehicle speed and outputs an activation command to the determining portion 64 if the vehicle speed is less than the value output from the subtracting portion 62.

The determining portion 64 outputs an ASL reset command and resets the ASL upon receiving the activation command output from the comparing portion 63 while the ASL temporary cancellation command is being output.

The control structure of the control apparatus 3 includes an adding portion 65, a subtracting portion 67, comparing portions 66 and 68, an AND operation portion 69, an OR operation (i.e., logical addition) portion 70, and a timer 61. These portions realize the shift control function of temporarily cancelling and resetting ASL.

The ASL temporary cancellation command output from the determining portion 60 is also output as a shift prohibiting command. That is, the determining portion 60 simultaneously temporarily cancels the ASL setting and outputs a shift prohibiting command to prohibit a downshift from being performed due to the kickdown switch 23 being pushed. This shift prohibiting command is cancelled if it is unlikely that the acceleration force of the vehicle will suddenly change.

In this example embodiment, the shift prohibiting command is cancelled when the throttle opening amount is near the throttle opening amount limit (FIG 2) or when a predetermined period of time has passed after the ASL temporary cancellation command was output.

The adding portion 65 adds a threshold value γ1 to the throttle opening amount and outputs a signal indicative of the sum to the comparing portion 66. The comparing portion 66 compares the throttle opening amount limit with the value output from the adding portion 65 and outputs an activation command to the AND operation portion 69 if the throttle opening amount limit is less than the value (i.e., the sum of the throttle opening amount + the threshold value γ1) output from the adding portion 65.

The subtracting portion 67 subtracts a threshold value γ2 from the throttle opening amount and outputs a signal indicative of the difference to the comparing portion 68. The comparing portion 68 compares the throttle opening amount limit with the value output from the subtracting portion 67 and outputs an activation command to the AND operation portion 69 if the throttle opening amount limit is greater than the value (i.e., the difference of the throttle opening amount - the threshold value γ2) output from the subtracting portion 67.

The AND operation portion 69 is interposed between the comparing portions 66 and 68 and the OR operation portion 70, and outputs an activation command to the OR operation portion 70 only when an activation command is output from both of the comparing portions 66 and 68. That is, the AND operation portion 69 outputs an activation command only when the relationship (throttle opening amount - threshold value γ2) < throttle opening amount limit < (throttle opening amount + threshold value γ1) is satisfied.

The timer 61 outputs an activation command to the OR operation portion 70 when a predetermined period of time has passed after the ASL temporary cancellation command was output by the determining portion 60.

The OR operation portion 70 receives the outputs from the timer 61 and the AND operation portion 69 and outputs a shift prohibited cancelling command if both of the outputs are activation commands.

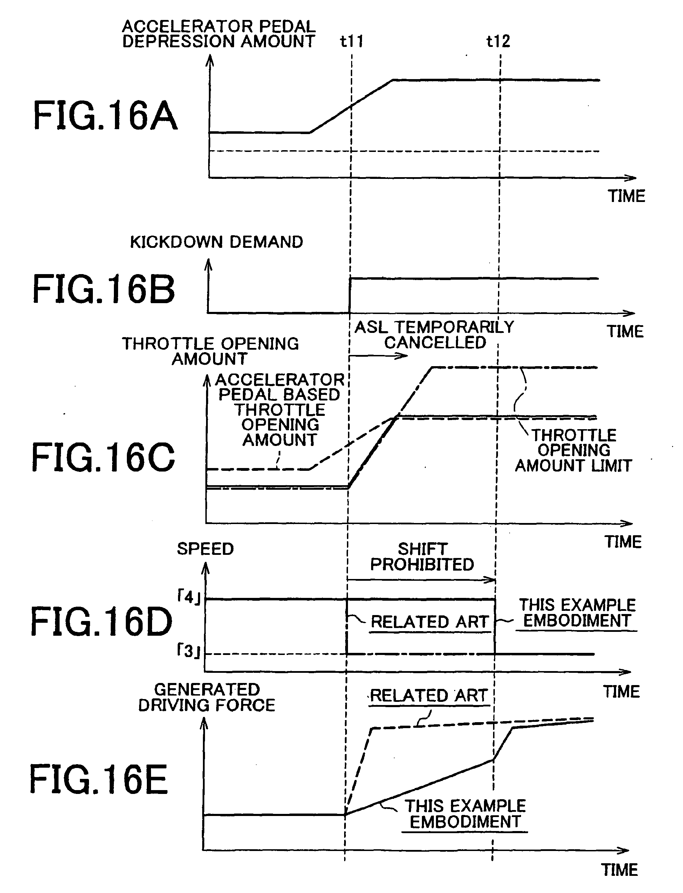

FIGS. 16A to 16E are time charts showing the operation related to temporary cancellation of ASL according to the third example embodiment of the invention.

FIG 16A shows the change over time in the accelerator pedal depression amount. FIG 16B shows the change over time in the kickdown demand. FIG 16C shows the change over time in the throttle opening amount. FIG 16D shows the change over time in the speeds selected by the automatic transmissions in this example embodiment and the related art. FIG 16E shows the change over time in the driving force generated in this example embodiment and the related art. Incidentally, the related art refers to a structure in which a shift prohibiting command is not output as it is in this example embodiment.

An example in which the driver depresses the accelerator pedal 22 further after it is already being depressed a predetermined amount will be described with reference to FIG 16A. Incidentally, the automatic transmission is in 4th speed before the accelerator pedal 22 is depressed. Also, referring to FIG 16C, the vehicle speed is near the speed limitation and the throttle opening amount is being restricted to the throttle opening amount limit.

As shown in FIG 16B, when the depression amount of the accelerator pedal 22 increases as a result of an accelerator operation by the driver and the kickdown switch 23 is pushed at time t11, a demand for a kickdown is generated. When this happens, the ASL setting is temporarily canceled, and as shown in FIG 16C, the throttle opening amount limit starts to increase from time t11. Accordingly, the throttle opening amount also increases until it matches the accelerator pedal based throttle opening amount.

Here, as shown in FIG 16D, in the related art, a downshift is performed in response to the kickdown demand such that the automatic transmission shifts from 4th speed to 3rd speed. As a result, the driving force generated in the vehicle suddenly increases as shown in FIG 16E.

On the other hand, with this example embodiment, a shift prohibiting command is output when ASL is temporarily cancelled so the automatic transmission stays in 4th speed, as shown in FIG 16D. As a result, the driving force generated in the vehicle increases relatively slowly, following the change in the accelerator pedal based throttle opening amount produced by the accelerator operation by the driver, as shown in FIG. 16E.

According to this third example embodiment of the invention, a structure that temporarily cancels ASL using a kickdown switch makes it possible to avoid more acceleration force than is required by the driver from being generated due to the driving force from the engine being increased and a downshift being performed simultaneously. As a result, ASL can be temporarily cancelled and reset safely without imparting an unpleasant sensation to the driver.

## Claims

1. A vehicle shift control apparatus used in a vehicle provided with a driving force source (4) that generates driving force for rotating a driving wheel (12) in response to a command produce based on an accelerator operation, and a transmission (8) which is arranged in a power transmitting path from the driving force source to the driving wheel and transmits driving force via a speed ratio selected from a plurality of speed ratios, the vehicle shift control apparatus comprising:
vehicle speed detecting means (20) for detecting a vehicle speed of the vehicle;
limitation value determining means (30, 31) for determining a limitation value which is a maximum value of a command that can keep the vehicle speed equal to or less than a set vehicle speed limitation;
limiting means (32) for limiting the command so that the command does not exceed the limitation value;
shift controlling means (38) for executing shift control for selecting a speed ratio of the transmission based on at least the command after being limited and the vehicle speed;
first comparing means (33) for comparing a vehicle speed difference between the vehicle speed and the vehicle speed limitation with a first threshold value; **characterized by**
shift prohibiting means (33) for prohibiting the speed ratio in the shift controlling means from being shifted when the vehicle speed difference is less than the first threshold value.

2. The vehicle shift control apparatus according to claim 1, further comprising:
second comparing means (35) for comparing the vehicle speed difference with a second threshold value that is less than the first threshold value; and
cancelling means (35) for cancelling the shift prohibition of the speed ratio in the shift controlling means when the vehicle speed difference is less than the second threshold value.

3. The vehicle shift control apparatus according to claim 1, further comprising:
cancelling means (42) for cancelling the shift prohibition of the speed ratio in the shift controlling means after a predetermined period of time has passed after the speed ratio in the shift prohibiting means has been prohibited from being shifted.

4. The vehicle shift control apparatus according to claim 1, further comprising:
second comparing means (35) for comparing the vehicle speed difference with a second threshold value that is less than the first threshold value; and
cancelling means (37) for cancelling the shift prohibition of the speed ratio in the shift controlling means when the vehicle speed difference is less than the second threshold value and a predetermined period of time has passed after the speed ratio in the shift prohibiting means has been prohibited from being shifted.

5. The vehicle shift control apparatus according to any one of claims 1 to 4, wherein the shift prohibiting means includes detecting means (40) for detecting a rate of increase over time in the accelerator operation; third comparing means (41) for comparing the rate of increase over time in the accelerator operation detected by the detecting means with a third threshold value; and prohibiting condition determining means (39) for prohibiting the speed ratio in the shift controlling means from being shifted when the vehicle speed difference is less than the first threshold value and the rate of increase over time in the accelerator operation is greater than the third threshold value.

6. The vehicle shift control apparatus according to any one of claims 1 to 5, wherein the shift controlling means shifts the speed ratio from the currently selected speed ratio to a speed ratio with a larger reduction ratio when the command after being limited exceeds a predetermined value determined according to the vehicle speed.

7. The vehicle shift control apparatus according to claim 1, wherein the shift controlling means shifts the speed ratio from the currently selected speed ratio to a speed ratio with a smaller reduction ratio when the command after being limited falls below a predetermined value determined according to the vehicle speed.

8. The vehicle shift control apparatus according to any one of claims 1 to 7, further comprising:
kickdown means (60) for temporarily cancelling operation of the limiting means and shifting the speed ratio from the currently selected speed ratio to a speed ratio with a larger reduction ratio when the accelerator operation is equal to or greater than a predetermined value; and
resetting means (63, 64) for then restarting operation of the limiting means when the vehicle speed has become less than a value equal to the difference of the vehicle speed limitation minus a fourth threshold value.

9. A vehicle shift control method used in a vehicle provided with a driving force source (4) that generates driving force for rotating a driving wheel (12) in response to a command produced based on an accelerator operation, and a transmission (8) which is arranged in a power transmitting path from the driving force source to the driving wheel and transmits driving force via a speed ratio selected from a plurality of speed ratios, the vehicle shift control method comprising the steps of:
detecting a vehicle speed of the vehicle;
determining a limitation value which is a maximum value of a command that can keep the vehicle speed equal to or less than a set vehicle speed limitation;
limiting the command so that the command does not exceed the limitation value;
executing shift control for selecting a speed ratio of the transmission based on at least the commend after being limited and the vehicle speed;
comparing a vehicle speed difference between the vehicle speed and the vehicle speed limitation with a first threshold value; **characterized by**
prohibiting the speed ratio from being shifted when the vehicle speed difference is less than the first threshold value.

## Patentansprüche

1. Fahrzeugschaltsteuerungsgerät, das in einem Fahrzeug verwendet ist, welches mit einer Antriebskraftquelle (4), die eine Antriebskraft zum Drehen eines Antriebsrads (12) in Erwiderung auf einen Steuerbefehl erzeugt, der basierend auf einer Beschleunigerbetätigung erzeugt ist, und einem Getriebe (8) versehen ist, das in einem Kraftübertragungsweg von der Antriebskraftquelle zu dem Antriebsrad angeordnet ist und eine Antriebskraft über ein Drehzahlverhältnis überträgt, das von einer Vielzahl von Drehzahlverhältnissen ausgewählt ist, wobei das Fahrzeugschaltsteuerungsgerät Folgendes aufweist:
eine Fahrzeuggeschwindigkeitserfassungseinrichtung (20) zu Erfassen einer Fahrzeuggeschwindigkeit des Fahrzeugs;
eine Begrenzungswertbestimmungseinrichtung (30, 31) zum Bestimmen eines Begrenzungswerts, der ein Maximalwert eines Steuerbefehls ist, welcher die Fahrzeuggeschwindigkeit gleich wie oder niedriger als eine eingestellte Fahrzeuggeschwindigkeitsbegrenzung beibehalten kann;
eine Begrenzungseinrichtung (32) zum Begrenzen des Steuerbefehls, so dass der Steuerbefehl nicht den Begrenzungswert übersteigt;
eine Schaltsteuerungseinrichtung (38) zum Ausführen einer Schaltsteuerung zum Auswählen eines Drehzahlverhältnisses des Getriebes basierend auf
wenigstens dem Steuerbefehl, nachdem dieser begrenzt ist, und der Fahrzeuggeschwindigkeit;
eine erste Vergleichseinrichtung (33) zum Vergleichen einer Fahrzeuggeschwindigkeitsdifferenz zwischen der Fahrzeuggeschwindigkeit und der Fahrzeuggeschwindigkeitsbegrenzung mit einem ersten Schwellenwert
**gekennzeichnet durch**
eine Schaltverhinderungseinrichtung (33), um das Drehzahlverhältnis in der Schaltsteuerungseinrichtung daran zu hindern, geschaltet zu werden, wenn die Fahrzeuggeschwindigkeitsdifferenz kleiner als der erste Schwellenwert ist.

2. Fahrzeugschaltsteuerungsgerät nach Anspruch 1, ferner mit:
einer zweiten Vergleichseinrichtung (35) zum Vergleichen der Fahrzeuggeschwindigkeitsdifferenz mit einem zweiten Schwellenwert, der niedriger als der erstes Schwellenwert ist; und
einer Aufhebungseinrichtung (35) zum Aufheben der Schaltverhinderung des Drehzahlverhältnisses in der Schaltsteuerungseinrichtung, wenn die Fahrzeuggeschwindigkeitsdifferenz kleiner als der zweite Schwellenwert ist.

3. Fahrzeugschaltsteuerungsgerät nach Anspruch 1, ferner mit:
einer Aufhebungseinrichtung (42) zum Aufheben der Schaltverhinderung des Drehzahlverhältnisses in der Schaltsteuerungseinrichtung, nachdem eine vorbestimmte Zeitdauer verstrichen ist, nachdem das Drehzahlverhältnis in der Schaltverhinderungseinrichtung an einem Schalten gehindert wurde.

4. Fahrzeugschaltsteuerungsgerät nach Anspruch 1, ferner mit:
einer zweiten Vergleichseinrichtung (35) zum Vergleichen der Fahrzeuggeschwindigkeitsdifferenz mit einem zweiten Schwellenwert, der niedriger als der erste Schwellenwert ist; und
einer Aufhebungseinrichtung (37) zum Aufheben der Schaltverhinderung des Drehzahlverhältnisses in der Schaltsteuerungseinrichtung, wenn die Fahrzeuggeschwindigkeitsdifferenz niedriger als der zweite Schwellenwert ist und eine vorbestimmte Zeitdauer verstrichen ist, nachdem das Drehzahlverhältnis in der Schaltverhinderungseinrichtung an einem Schalten gehindert wurde.

5. Fahrzeugschaltsteuerungsgerät nach einem der Ansprüche 1 bis 4, wobei die Schaltverhinderungseinrichtung eine Erfassungseinrichtung (40) zum Erfassen einer Erhöhungsrate über eine Zeit in dem Beschleunigungsvorgang;
eine dritte Vergleichseinrichtung (41) zum Vergleichen der Erhöhungsrate über die Zeit in dem Beschleunigungsvorgang, die durch die Erfassungseinrichtung erfasst ist, mit einem dritten Schwellenwert; und
eine Verhinderungsbedingungsbestimmungseinrichtung (39) aufweist, um das Drehzahlverhältnis in der Schaltsteuerungseinrichtung daran zu hindern, geschaltet zu werden, wenn die Fahrzeuggeschwindigkeitsdifferenz niedriger als der erste Schwellenwert ist und die Erhöhungsrate über die Zeit in dem Beschleunigungsvorgang größer als der dritte Schwellenwert ist.

6. Fahrzeugschaltsteuerungsgerät nach einem der Ansprüche 1 bis 5, wobei die Schaltsteuerungseinrichtung das Drehzahlverhältnis von dem derzeit ausgewählten Drehzahlverhältnis zu einem Drehzahlverhältnis mit einem größeren Untersetzungsverhältnis schaltet, wenn der Steuerbefehl, nachdem dieser begrenzt ist, einen vorbestimmten Wert übersteigt, der gemäß der Fahrzeuggeschwindigkeit bestimmt ist.

7. Fahrzeugschaltsteuerungsgerät nach Anspruch 1, wobei die Schaltsteuerungseinrichtung das Drehzahlverhältnis von dem derzeit ausgewählten Drehzahlverhältnis zu einem Drehzahlverhältnis mit einem kleineren Untersetzungsverhältnis schaltet, wenn der Steuerbefehl, nachdem dieser begrenzt ist, unter einen vorbestimmten Wert fällt, der gemäß der Fahrzeuggeschwindigkeit bestimmt ist.

8. Fahrzeugschaltsteuerungsgerät nach einem der Ansprüche 1 bis 7, ferner mit:
einer Kick-down-Einrichtung (60) zum zeitweiligen Aufheben eines Betriebs der Begrenzungseinrichtung und zum Schalten des Drehzahlverhältnisses von dem derzeit ausgewählten Drehzahlverhältnis zu einem Drehzahlverhältnis mit einem größeren Untersetzungsverhältnis, wenn die Beschleunigerbetätigung gleich wie oder größer als ein vorbestimmter Wert ist; und
einer Zurücksetzungseinrichtung (63, 64) zum erneuten Starten eines Betriebs der Begrenzungseinrichtung dann, wenn die Fahrzeuggeschwindigkeit niedriger als ein Wert gleich der Differenz der Fahrzeuggeschwindigkeitsbegrenzung minus einem vierten Schwellenwert wurde.

9. Fahrzeugschaltsteuerungsverfahren, das in einem Fahrzeug verwendet wird, welches mit einer Antriebskraftquelle (4), die eine Antriebskraft zum Drehen eines Antriebsrads (12) in Erwiderung auf einen Steuerbefehl erzeugt, der basierend auf einer Beschleunigerbetätigung erzeugt ist, und einem Getriebe (8) versehen ist, das in einem Kraftübertragungsweg von der Antriebskraftquelle zu dem Antriebsrad angeordnet ist und eine Antriebskraft über ein Drehzahlverhältnis überträgt, welches von einer Vielzahl von Drehzahlverhältnissen ausgewählt ist, wobei das Fahrzeugschaltsteuerungsverfahren die folgenden Schritte aufweist:
Erfassen einer Fahrzeuggeschwindigkeit des Fahrzeugs;
Bestimmen eines Begrenzungswerts, welcher ein Maximalwert eines Steuerbefehls ist, der die Fahrzeuggeschwindigkeit gleich wie oder kleiner als eine eingestellte Fahrzeuggeschwindigkeitsbegrenzung halten kann;
Begrenzen des Steuerbefehls, so dass der Steuerbefehl nicht den Begrenzungswert übersteigt;
Ausführen einer Schaltsteuerung zum Auswählen eines Drehzahlverhältnisses des Getriebes basierend auf wenigstens dem Steuerbefehl, nachdem dieser begrenzt wurde, und der Fahrzeuggeschwindigkeit;
Vergleichen einer Fahrzeuggeschwindigkeitsdifferenz zwischen der Fahrzeuggeschwindigkeit und der Fahrzeugsgeschwindigkeitsbegrenzung mit einem ersten Schwellenwert;
**gekennzeichnet durch**
Hindern des Drehzahlverhältnisses daran, geschaltet zu werden, wenn die Fahrzeuggeschwindigkeitsdifferenz niedriger als der erste Schwellenwert ist.

## Revendications

1. Appareil de commande du changement de vitesse pour véhicule utilisé dans un véhicule équipé d'une source (4) de force d'entraînement qui génère une force d'entraînement pour faire tourner une roue motrice (12) en réponse à une commande produite sur la base de l'actionnement d'un accélérateur, et une transmission (8) qui est agencée dans un chemin de transmission de puissance de la source de force d'entraînement à la roue motrice et qui transmet une force d'entraînement au moyen d'un rapport de vitesse sélectionné à partir d'une pluralité de rapports de vitesse, l'appareil de commande de changement de vitesse pour véhicule comprenant :
un moyen (20) de détection de la vitesse du véhicules pour détecter la vitesse de véhicule du véhicule ;
un moyen (30, 31) de détermination de la valeur de limitation pour déterminer une valeur de limitation qui est une valeur maximale d'une commande qui peut maintenir la vitesse du véhicule inférieure ou égale à une limitation de la vitesse de véhicule établie ;
un moyen de limitation (32) pour limiter la commande de sorte que la commande ne dépasse pas la valeur de limitation ;
un moyen (38) de commande de changement de vitesse pour exécuter une commande du changement de vitesse afin de sélectionner un rapport de vitesse de la transmission sur la base d'au moins la commande après limitation et de la vitesse du véhicule ;
un premier moyen de comparaison (33) pour comparer une différence de vitesses d'un véhicule entre la vitesse du véhicule et la limitation de la vitesse du véhicule à une première valeur seuil, **caractérisé par**
un moyen (33) d'interdiction de changement de vitesse pour interdire le changement du rapport de vitesse dans le moyen de commande du changement de vitesse lorsque la différence de la vitesse du véhicule est inférieure à la première valeur seuil.

2. Appareil de commande de changement de vitesse pour véhicule selon la revendication 1, comprenant en outré :
un deuxième moyen de comparaison (35) pour comparer la différence de vitesse du véhicule à une deuxième valeur seuil qui est inférieure à la première valeur seuil ; et
un moyen d'annulation (35) pour annuler l'interdiction de changement de vitesse du rapport de vitesse dans le moyen de commande de changement de vitesse lorsque la différence de la vitesse du véhicule est inférieure à la deuxième valeur seuil.

3. Appareil de commande de changement de vitesse pour véhicule selon la revendication 1, comprenant en outre :
un moyen d'annulation (42) pour annuler l'interdiction de changement de vitesse du rapport de vitesse dans le moyen de commande du changement de vitesse après écoulement d'une période prédéterminée après que l'on a interdit le changement du rapport de vitesse dans le moyen d'interdiction de changement de vitesse.

4. Appareil de commande de changement de vitesse pour véhicule selon la revendication 1, comprenant en outré :
un deuxième moyen de comparaison (35) pour comparer la différence de vitesse du véhicule à une deuxième valeur seuil qui est inférieure à la première valeur seuil ; et
un moyen d'annulation (37) pour annuler l'interdiction de changement de vitesse du rapport de vitesse dans le moyen de commande du changement de vitesse lorsque la différence de la vitesse du véhicule est inférieure à la deuxième valeur seuil et qu'une période prédéterminée s'est écoulée après interdiction du changement du rapport de vitesse dans le moyen d'interdiction de changement de vitesse.

5. Appareil de commande du changement de vitesse pour véhicule selon l'une quelconque des revendications 1 à 4, dans lequel le moyen d'interdiction de changement de vitesse comporte un moyen de détection (40) pour détecter une cadence d'augmentation de l'actionnement de l'accélérateur au cours du temps; un troisième moyen de comparaison (41) pour comparer la cadence d'augmentation de l'actionnement de l'accélérateur au cours du temps détectée par le moyen de détection à une troisième valeur seuil ; et un moyen (39) de détermination de la condition d'interdiction pour interdire le changement du rapport de vitesse dans le moyen de commande du changement de vitesse lorsque la différence de vitesse du véhicule est inférieure à la première valeur seuil et que la cadence d'augmentation de l'actionnement de l'accélérateur au cours du temps est supérieure à la troisième valeur seuil.

6. Appareil de commande du changement de vitesse pour véhicule selon l'une quelconque des revendications 1 à 5, dans lequel le moyen de commande de changement de vitesse change le rapport de vitesse du rapport de vitesse actuellement sélectionné à un rapport de vitesse ayant un rapport de réduction plus élevé lorsque la commande après limitation dépasse une valeur prédéterminée déterminée selon la vitesse du véhicule.

7. Appareil de commande du changement de vitesse pour véhicule selon la revendication 1, dans lequel le moyen de commande de changement de vitesse change le rapport de vitesse d'un rapport de vitesse actuellement sélectionné à un rapport de vitesse ayant un rapport de réduction plus petit lorsque la commande après limitation se trouve au-dessous d'une valeur prédéterminée déterminée selon la vitesse du véhicule.

8. Appareil de commande du changement de vitesse pour véhicule selon l'une quelconque des revendications 1 à 7, comprenant en outre :
un moyen de rétrogradation forcée (60) pour annuler temporairement le fonctionnement du moyen de limitation et pour changer le rapport de vitesse du rapport de vitesse actuellement sélectionné à un rapport de vitesse ayant un rapport de réduction plus élevé lorsque l'actionnement de l'accélérateur est supérieur ou égal à une valeur prédéterminée ; et
un moyen de réinitialisation (63, 64) pour reprendre le fonctionnement du moyen de limitation lorsque la vitesse du véhicule est devenue inférieure à une valeur égale à la différence de la limitation de vitesse du véhicule moins une quatrième valeur seuil.

9. Procédé de commande de changement de vitesse pour un véhicule utilisé dans un véhicule équipé d'une source (4) de force d'entraînement qui génère une force d'entraînement pour faire tourner une roue motrice (12) en réponse à une commande produite sur la base d'un actionnement de l'accélérateur, et une transmission (8) qui est agencée dans un chemin de transmission de puissance de la source de force d'entraînement à la roue motrice et qui transmet une force d'entraînement par un rapport de vitesse sélectionné à partir d'une pluralité de rapports de vitesse, le procédé de commande de changement de vitesse pour véhicule comprenant les étapes qui consistent :
à détecter une vitesse de véhicule du véhicule ;
à déterminer une valeur de limitation qui est une valeur maximale d'une commande qui peut maintenir la vitesse de véhicule inférieure ou égale à une limitation de la vitesse du véhicule établie ;
à limiter la commande de sorte que la commande ne dépasse pas la valeur de limitation ;
à exécuter une commande de changement de vitesse pour sélectionner un rapport de vitesse de la transmission sur la base d'au moins la commande après limitation et de la vitesse de véhicule ;
à comparer une différence de vitesse de véhicule entre la vitesse de véhicule et la limitation de la vitesse du véhicule à une première valeur seuil ; **caractérisé par** le fait
d'interdire le changement du rapport de vitesse lorsque la différence de vitesse de véhicule est inférieure à la première valeur seuil.
